(19)

Europäisches
Patentamt
European
Patent Office
Office européen
des brevets

(11) **EP 3 104 212 A2**

(12) **EUROPEAN PATENT APPLICATION**

(43) Date of publication:
**14.12.2016 Bulletin 2016/50**

(51) Int Cl.:
***G02B 27/48*** (2006.01)     ***G02B 3/00*** (2006.01)
***G02B 26/10*** (2006.01)     ***G02B 27/01*** (2006.01)

(21) Application number: **16173581.6**

(22) Date of filing: **08.06.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **11.06.2015   JP 2015118138
28.07.2015   JP 2015148839
25.03.2016   JP 2016061771**

(71) Applicant: **Ricoh Company, Ltd.
Tokyo 143-8555 (JP)**

(72) Inventors:
• **TANABE, Hiroyuki
Toyko, 143-8555 (JP)**
• **ICHII, Daisuke
Kanagawa-ken, 222-0033 (JP)**
• **INAMOTO, Makoto
Toyko, 143-8555 (JP)**
• **NAKAMURA, Kento
Toyko, 143-8555 (JP)**

(74) Representative: **Leeming, John Gerard
J A Kemp
14 South Square
Gray's Inn
London WC1R 5JJ (GB)**

(54) **MICROLENS ARRAY, IMAGE DISPLAY APPARATUS, AND OPTICAL SCANNER**

(57)    A microlens array, an image display apparatus, and an optical scanner are provided. The microlens array includes microlenses (m11 to m17, m21 to m27, m31 to m37, m41 to m47, m51 to m57, ml) regularly arranged in a two-dimensional area, the microlenses (m11 to m17, m21 to m27, m31 to m37, m41 to m47, m51 to m57, ml) being two-dimensionally scanned by main scanning and sub-scanning of a light beam, where adjoining scanning lines are not parallel to each other. The microlenses (m11 to m17, m21 to m27, m31 to m37, m41 to m47, m51 to m57, ml) are main-scanned by any desired main-scanning light beam, and are arranged to follow a scanning line of the main scanning. The image display apparatus includes the microlens array. The optical scanner includes a scanning optical system and an optical element.

FIG. 1

EP 3 104 212 A2

**Description**

BACKGROUND

Technical Field

Embodiments of the present invention relate to a microlens array, an image display apparatus, and an optical scanner.

Background Art

Microlens arrays are used in various applications, and it has been known recently that a microlens array is used in an image display apparatus such as a heads-up display (HUD) and a stereoscopic two-dimensional image display (see JP-2014-139655-A, JP-2014-139656-A, JP-5228785-B, and WO 2006/077706). In the microlens array used in each of these image displays, the microlenses are arranged in an array in a two-dimensional area. The array arrangement of microlenses is regular, and the one-dimensional arrangement is linear.

Further, in recent years, the microlens array is applied to a light scanning device for displaying an image. For example, optical scanners for optical scanning a screen (for example, a microlens array) and displaying an image are known (see, for example, JP-2015-034877-A, JP-2014-139657-A, JP-4620901-B, and JP-5091112-B). However, in the devices disclosed in JP-2015-034877-A, JP-2014-139657-A, JP-4620901-B, and JP-5091112-B, there is room for improvement in controlling reduction in image quality.

SUMMARY

According to one aspect of the present invention, a novel microlens array can be achieved, and reduction in image quality can be controlled.

Embodiments of the present invention described herein provide a microlens array, an image display apparatus, and an optical scanner. The microlens array includes microlenses regularly arranged in a two-dimensional area, the microlenses being two-dimensionally scanned by main scanning and sub-scanning of a light beam, where adjoining scanning lines are not parallel to each other. The microlenses are main-scanned by any desired main-scanning light beam, and are arranged to follow a scanning line of the main scanning.

Embodiments of the present invention include an image display apparatus including the microlens array.

Embodiments of the present invention include an optical scanner including a scanning optical system and an optical element. The scanning optical system includes the light source to emit light and a deflector to deflect the light emitted from the light source, and the optical element includes a plurality of projections that are arranged in the microlens array, and the optical element is irradiated with the light from the scanning optical system. Moreover, in an arrangement of the protrusions of the optical element, a pitch $P2$, in a second direction, of the projections is varied in a first direction, and the second direction is perpendicular to the first direction in a surface of the arrangement of the projections.

Embodiments of the present invention include an image display apparatus including the microlens array, and a mobile object including the image display apparatus.

BRIEF DESCRIPTION OF THE DRAWINGS

A more complete appreciation of exemplary embodiments and the many attendant advantages thereof will be readily obtained as the same becomes better understood by reference to the following detailed description when considered in connection with the accompanying drawings.

FIG. 1 is a diagram illustrating a heads-up display (HUD), which is an example of an image display apparatus, according to an embodiment of the present invention.
FIG. 2A and FIG. 2B are diagrams illustrating two-dimensional scanning in a microlens array of the HUD of FIG. 1.
FIG. 3 is a diagram illustrating scanning lines of the two-dimensional scanning illustrated in FIG. 2A and FIG. 2B.
FIG. 4A and FIG. 4B are diagrams each illustrating the scanning of the microlens array by the scanning lines illustrated in FIG. 3.
FIG. 5 is a schematic diagram illustrating an example of the arrangement of microlenses in a microlens array, according to an embodiment of the present invention.
FIG. 6A to FIG. 6D are diagrams illustrating four types of microlens arrays, according to an embodiment of the present invention.
FIG. 7A and FIG. 7B are diagrams each illustrating an example of a two-dimensional arrangement of microlenses, according to an embodiment of the present invention.
FIG. 8A and FIG. 8B are diagrams each illustrating another example of the two-dimensional arrangement of microlenses, according to an embodiment of the present invention.
FIG. 9A and FIG. 9B are diagrams each illustrating another example of the two-dimensional arrangement of microlenses, according to an embodiment of the present invention.
FIG. 10 is a diagram illustrating yet another example of the arrangement of microlenses in a microlens array, according to an embodiment of the present invention.
FIG. 11A and FIG. 11B are diagrams each illustrating yet another example of the arrangement of micro-lenses in a microlens array, according to an embodiment of the present invention.

FIG. 12A to FIG. 12C each illustrate a selected portion of an image display apparatus according to a first embodiment of the present invention.

FIG. 13A and FIG. 13B are diagrams each illustrating diffusion by micro-convex lenses and development of coherent noise, according to an embodiment of the present invention.

FIG. 14A to FIG. 14C are diagrams each illustrating removal of coherent noise, according to an embodiment of the present invention.

FIG. 15A to FIG. 15C are diagrams illustrating three examples of array forms of micro-convex lenses, according to an embodiment of the present invention.

FIG. 16A to FIG. 16E are diagrams illustrating other five examples of array forms of micro-convex lenses, according to an embodiment of the present invention.

FIG. 17A and FIG. 17B are diagrams illustrating an anamorphic micro-convex lens according to an embodiment of the present invention.

FIG. 18A and FIG. 18B are diagrams illustrating two examples of a to-be-scanned surface according to an embodiment of the present invention.

FIG. 19 is a diagram illustrating another example of array form of micro-convex lenses according to an embodiment of the present invention.

FIG. 20 is a block diagram illustrating a hardware configuration of an image display apparatus according to an embodiment of the present invention.

FIG. 21 is a functional block diagram illustrating an image display apparatus according to an embodiment of the present invention.

FIG. 22 is a diagram illustrating a light deflector as a two-dimensional deflector according to an embodiment of the present invention.

FIG. 23A and FIG. 23B are diagrams each illustrating a micro-lens arrays (MLA) of HUD, according to an embodiment of the present invention.

FIG. 24 is a diagram illustrating lens pitches of an MLA according to an embodiment of the present invention.

FIG. 25A and FIG. 25B are diagrams illustrating honeycomb-type arrays of micro-lenses according to an embodiment of the present invention.

FIG. 26 is a diagram illustrating a microlens array according to a control sample.

FIG. 27 is a diagram illustrating an example of the trajectory of a scanning line when two-dimensional scanning is performed, according to an embodiment of the present invention.

FIG. 28 is a diagram illustrating another example of the trajectory of a scanning line when two-dimensional scanning is performed, according to an embodiment of the present invention.

FIG. 29 is a diagram illustrating the left half of an image when Py = Ps, according to an embodiment of the present invention.

FIG. 30A and FIG. 30B are diagrams each illustrating a moire developed on an image when Py = Ps, according to an embodiment of the present invention.

FIG. 31 is a diagram illustrating the left half of an image when Py > Ps, according to an embodiment of the present invention.

FIG. 32A and FIG. 32B are diagrams each illustrating how granularity of an image deteriorates when Py > Ps, according to an embodiment of the present invention.

FIG. 33 is a diagram illustrating the left half of an image when Py > Ps, according to an embodiment of the present invention.

FIG. 34A and FIG. 34B are diagrams each illustrating a speckle pattern developed on an image when Py < Ps, according to an embodiment of the present invention.

FIG. 35 is a diagram illustrating an example of a microlens array according to a second embodiment of the present invention.

FIG. 36 is a graph illustrating the changes, in the X direction, of a scanning line cycle (represented by "scan") and a lens pitch Py (represented by "Case 1 to Case 4"), according to the second embodiment.

FIG. 37A and FIG. 37B are diagrams each illustrating a cross-sectional profile of the scanning lines illustrated in FIG. 27.

FIG. 38 is a diagram illustrating a microlens array according to a first modification of the second embodiment of the present invention.

FIG. 39 is a diagram illustrating a microlens array according to a second modification of the second embodiment of the present invention.

FIG. 40 is a diagram illustrating a microlens array according to a third modification of the second embodiment of the present invention.

FIG. 41 is a diagram illustrating a micromirror array according to an embodiment of the present invention.

The accompanying drawings are intended to depict exemplary embodiments of the present disclosure and should not be interpreted to limit the scope thereof. The accompanying drawings are not to be considered as drawn to scale unless explicitly noted.

DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that have the same structure, operate in a similar manner, and achieve a similar result.

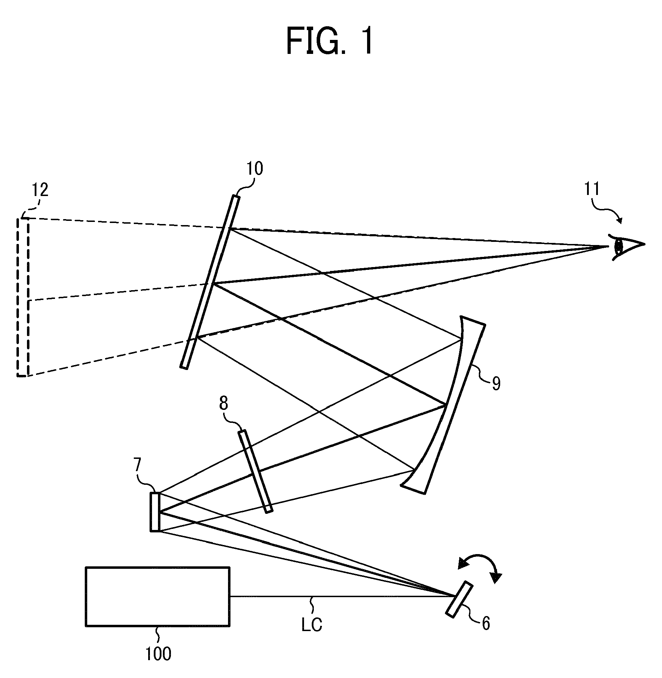

Example embodiments of the present invention will be described below. A configuration of an image display according to an embodiment of the present invention is described with reference to FIG. 1. An image display apparatus illustrated in FIG. 1 is a heads-up display (HUD) and is provided, for example, for a mobile object such as a vehicle, an aircraft, and a ship, and displays navigation information used for operating the mobile object (for example, speed and mileage). In the following description, cases in which the HUD illustrated in FIG. 1 is an on-vehicle HUD. In FIG. 1, a light source unit 100 emits a light beam LC for displaying a color image. The light beam LC is a bundle of collimated light beams in which beams of three colors including red (R), green (G), and blue (B) are combined. Note that the intensity of the laser-beam bundles of RGB colors that make up the light beam LC is modulated according to the image signal of a "two-dimensional color image" to be displayed.

The light beam LC emitted from the light source unit 100 enters a deflector 6 and is two-dimensionally deflected. In the present embodiment, the deflector 6 moves a minute mirror on a pivot that is formed by "two axes that are orthogonal to each other". More specifically, the deflector 6 consists of micro-electromechanical systems (MEMS) that are formed as a minute pivoting mirror by semiconductor processes or the like. However, no limitation is intended thereby, and the two-dimensional deflector 6 may be, for example, combinations of two minute mirrors that pivot on a single axis in the directions that are orthogonal to each other. The light beam LC that is two-dimensionally deflected by the deflector 6 enters a scanning mirror 7 and is reflected towards a microlens array 8. The scanning mirror 7 has an optical effect to deflect an optical path of the light beam LC that is two-dimensionally deflected and enters the scanning mirror 7 towards the microlens array 8. The scanning mirror 7 may be omitted, and the light beam LC that is two-dimensionally deflected by the deflector 6 may directly enter the microlens array 8.

The light beam LC that is reflected by the scanning mirror 7 is two-dimensionally deflected and enters the microlens array 8, and two-dimensionally scans the microlens array 8.

This two-dimensional scanning forms a "two-dimensional color image" as an "original image" on the microlens array 8. As a matter of course, what is displayed on the microlens array 8 at each moment is "only the pixels that are being irradiated by the light beam LC at that time". A two-dimensional color image as an "original image" is formed on the microlens array 8 as a "set of pixels that are displayed at each moment" realized by two-dimensional scanning using the light beam LC.

A concave mirror 9 forms a virtual image 12 of the original image formed on the microlens array 8, as an object. In other words, the light from the microlens array 8 enters the concave mirror 9 to form the virtual image 12 of the original image (two-dimensional color image). That is, the concave mirror 9 is an "image forming optical system to form a virtual image of an image to be displayed". An image forming light-beam bundle with which the concave mirror 9 forms the virtual image 12 is reflected by a reflector 10 towards an observer 11 (an eye of an observer is illustrated in FIG. 1). Due to the light reflected towards the observer 11 as above, the observer 11 can visually recognize the virtual image 12 of the two-dimensional color image.

That is, the image display apparatus (HUD) of FIG. 1 two-dimensionally scans the microlens array 8 using the light beam LC that is modulated according to an image to be displayed, and forms an image of the light from the microlens array 8 using the image forming optical system 9 as the virtual image 12. Further, the image display apparatus of FIG. 1 includes the light source unit 100 that emits the light beam LC that is modulated according to an image to be displayed,

the deflector 6 that two-dimensionally deflects the light beam LC,

the microlens array 8 that is two-dimensionally scanned by the light beam LC that is two-dimensionally deflected by the deflector 6, and the image forming optical system 9 that forms the virtual image 12 of the "image to be displayed" with the light from the microlens array 8. As described above, the HUD in FIG. 1 is an "on-vehicle" HUD, and the reflector 10 illustrated in FIG. 1 is a "windshield of a vehicle". As illustrated in FIG. 1, the virtual image 12 is formed at a position beyond the reflector 10 when viewed from the observer 11 side.

Here, in FIG. 1, an imaginary plane parallel to the surface of the microlens array 8 is assumed, and an x-direction and a y-direction are defined on this imaginary plane, where the y-direction corresponds to the vertical direction in FIG. 1 and the x-direction is in a direction perpendicular to the drawing. The two-dimensionally deflected light beam LC two-dimensionally scans the "xy surface" of the microlens array 8. The two-dimensional scanning by the light beam LC is a so-called "raster scan". The scanning in the x-direction is the "main scanning", and a two-dimensional area is scanned by "sub-scanning" in which the main scanning is repeated in the y-direction.

A trajectory of the light beam LC when the main scanning is performed is a "scanning line". Accordingly, in the two-dimensional scanning, the "scanning lines are arranged in the sub-scanning direction at a fine pitch".

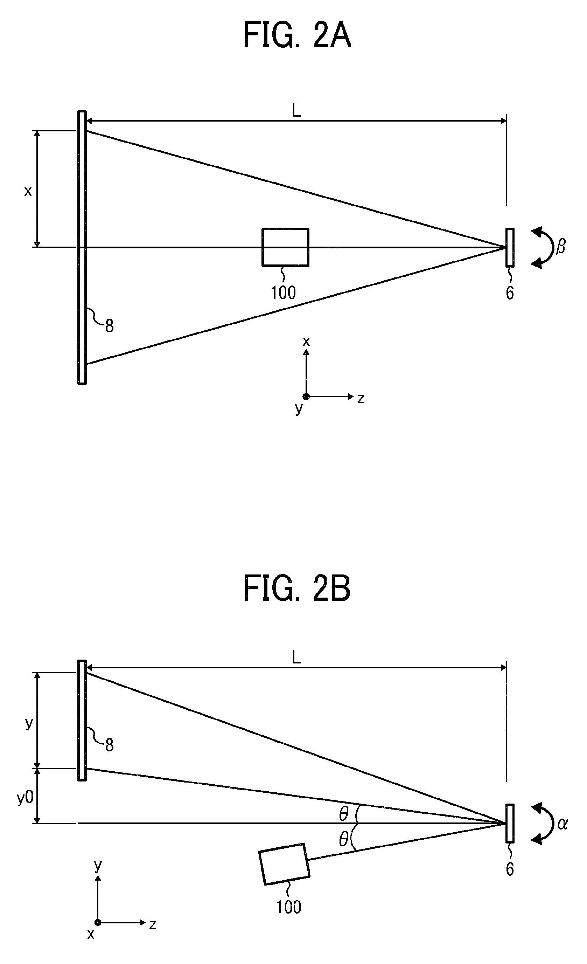

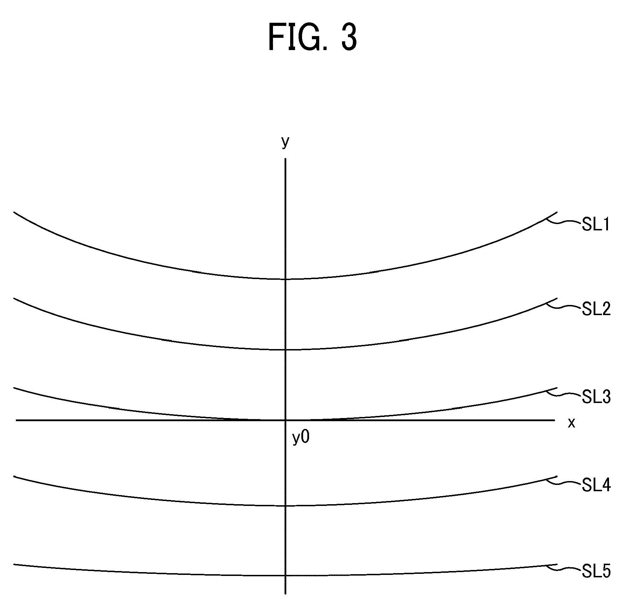

The microlens array 8 in the HUD in FIG. 1 is two-dimensionally scanned by the main scanning and the sub-scanning of the light beam LC, where the "scanning lines adjoining in the sub-scanning direction are not parallel to each other". This arrangement is described with reference to FIG. 2A, FIG. 2B, and FIG. 3. FIG. 2A and FIG. 2B are schematic diagrams illustrating how the light beam LC reaches the microlens array 8 from the light source unit 100 via the deflector 6, with reference to the above-described "x-direction and y-direction".

In FIG. 2A and FIG. 2B, the scanning mirror 7 of FIG. 1 is not illustrated, and the light beam LC that is two-dimensionally deflected by the deflector 6 enters directly the microlens array 8. As described above, the scanning mirror 7 deflects towards the microlens array 8 the optical path of the light beam LC that is two-dimensionally defected and enters the scanning mirror 7. Thus, the generality of the description is not lost even when the scanning mirror 7 is omitted in FIG. 2A and FIG. 2B. FIG. 2A illustrates how the microlens array 8 is scanned when viewed from the y-direction perpendicular to the drawing, and the vertical direction is the x-direction, where main scanning is performed in the x-direction. In FIG. 2A, the deflection angle, in the main scanning, of the deflector 6 (the angle at which the reflected light beam is deflected in the x-direction) is $\beta$. When the deflection angle $\beta$ is used, the main scanning position x is represented by the following equation, using the "distance L, in the z-direction (the z-direction represents the direction perpendicular to the x and y-directions)", between the microlens array 8 and the deflector 6.

x=L·tanβ

FIG. 2B illustrates how the microlens array 8 is scanned when viewed from the x-direction (main scanning direction) perpendicular to the drawing, where the vertical direction is the y-direction and the sub-scanning is performed in the y-direction. In FIG. 2B, the deflection angle, in the y-direction, by the deflector 6 (the angle at which the reflected light beam is deflected in the y-direction) is $\alpha$, and the "angle between the light beam LC and the Z-direction" is $\theta$ when $\alpha = 0$. The angle $\theta$ is a constant value and is determined by the arrangement of the optical system.

When the coordinates, in the y-direction, of the lens surface of the microlens array 8 are "y0 and y", the sub-scanning position y in the yz plane is represented by the following equation, using the distance L, the angle $\alpha$, and the angle $\theta$. That is, because the equations $y + y0 = L·\tan(\theta+\alpha)$ and $y0 = L·\tan\theta$, the sub-scanning position y is represented by the following equation.

equation.

$$y=L·\tan(\theta+\alpha)-L·\tan\theta$$

In FIG. 2A, the "distance $\xi$ in the xz plane" from the deflector 6 to the xy plane is represented by "$\xi=$ L/cosβ", where β is the deflection angle.

Therefore, the sub-scanning position y, when the deflection angles are $\alpha$ and $\beta$, is represented by y = $(L/\cos\beta)\{\tan(\theta+\alpha)-\tan\theta\}$. The value L/cosβ increases with the angle $\beta$, and the sub-scanning position y also increases as the angle $\beta$ increases.

Therefore, the shape of the scanning line specified by the deflection angle $\alpha$ is a curved line "convex toward the negative direction in the y-direction", and the curvature is larger for the larger deflection angle $\alpha$.

FIG. 3 illustrates typical five scanning lines SL1 to SL5.

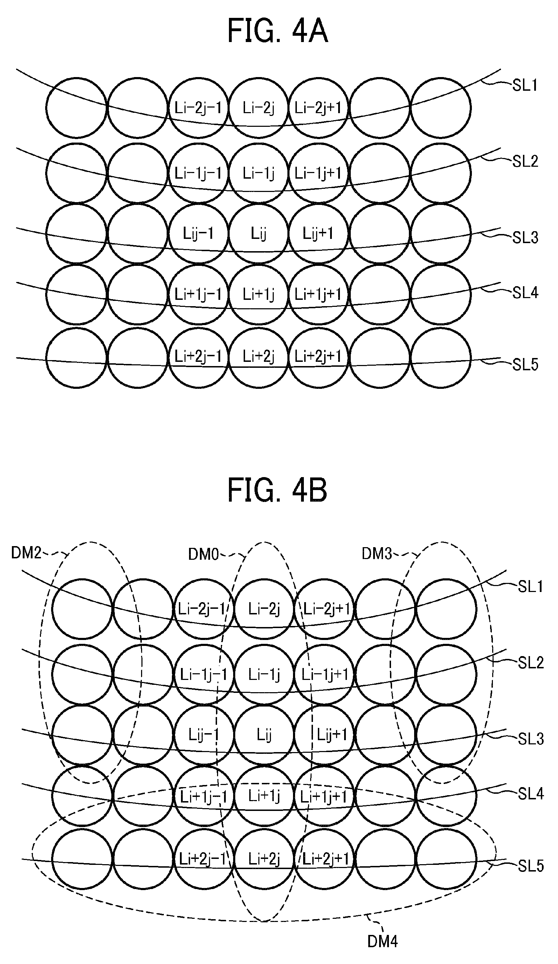

The scanning line SL1 represents a scanning line when the angle $\alpha$ is the largest, and the scanning line SL5 represents a scanning line when the angle $\alpha$ is the smallest. As illustrated in FIG. 3, the scanning lines SL1 to SL5 are "not parallel to each other". FIG. 4A and FIG. 4B are schematic diagrams illustrating how such scanning lines SL1 to SL5 scan the microlens array. For the purpose of simplification, it is assumed that the scanning lines SL1 to SL5 are "adjacent to each other". The microlens array is made up of the microlenses Li-2j-1, Li-2j, Li-2j+1, and so on, Li-1j-1, Li-1j, Li-1j+1, and so on, Lij-1, Lij, Lij+1, and so on, Li+1j-1, Li+1j, Li+1j+1, and so on, and Li+2j-1, Li+2j, Li+2j+1, and so on arranged in a square matrix shape. Such a two-dimensional arrangement of microlenses is referred to as a "square matrix arrangement".

The light beam for main-scanning the microlens arrangement, in which the microlens Li-2j-1, Li-2j, Li-2j+1, and so on are arranged, draws the scanning line SL1. The light beam for main-scanning the microlens arrangement, in which the microlens Li-1j-1, Li-1j, Li-1j+1, and so on are arranged, draws the scanning line SL2. The light beam for main-scanning the microlens arrangement, in which the microlens Lij-1, Lij, Lij+1, and so on are arranged, draws the scanning line SL3. The light beam for main-scanning the microlens arrangement, in which the microlens Li+1j-1, Li+1j, Li+1j+1, and so on are arranged, draws the scanning line SL4. The light beam for main-scanning the microlens arrangement, in which the microlens Li+2j-1, Li+2j, Li+2j+1, and so on are arranged, draws the scanning line SL5.

As known in the art, on the virtual image formed by the two-dimensional scanning on the microlens array, a "moire" is developed by the interference between the scanning lines and the regularly arranged microlens. The developed moire has a large (high) contrast when "the direction of the scanning lines and the direction of the microlens arrangement are parallel to each other". As illustrated in FIG. 4A, in the case that the scanning lines SL1 to SL5 are curved and do not have the same "degree of curvature" and that the scanning lines are not parallel to each other, the directions of the scanning lines and the microlens arrangement are not "parallel at any part" of the microlens array. More specifically, in the areas DM0 and DM4 illustrated in FIG. 4B, the microlens arrangement and the scanning lines are nearly parallel to each other; however, in the areas DM2 and DM3, the microlens arrangement and the scanning lines have a low "degree of parallelism". Accordingly, the moire that is developed on the parts of the virtual image corresponding to the areas DM0 and DM4 has a high contrast. On the other hand, the moire that is developed on the parts of the virtual image corresponding to the areas DM2 and DM3 have a low contrast. Therefore, in such a case as above, a "moire with gradation is developed" on the virtual image, and "the magnitude of the contrast depends on the image position".

Even in the case that a "moire" is developed, if the contrast of the moire is uniform over the virtual image, the "image quality of the virtual image" is not largely deteriorated visually. However, if the "magnitude of the contrast of the moire" developed on the virtual image is uneven, the image quality is significantly deteriorated. That is, in the case that the scanning lines of the light beam scanning the microlens array are curved and that the adjoining scanning lines are not parallel to each other, if the two-dimensional arrangement of microlenses is a "square matrix arrangement as described above", a "moire with different magnitudes of contrast" is developed. The microlens array according to the present embodiment of the present invention can effectively reduce such a "moire with different magnitudes of contrast". That is, in a microlens array according to the present embodiment of the present invention, the "microlenses are regularly arranged in a two-dimensional area". Here, the expression microlenses are "regularly" arranged in a two-dimensional area means that the microlenses are arranged not at random but according to a certain rule.

The two-dimensional scanning of the microlens array is performed by the "main scanning and the sub-scanning of the light beam, where the adjoining scanning lines are not parallel to each other". In the main scanning, the "scanning position of the light beam moves drawing the scanning line". The sub-scanning is performed by "switching the scanning lines in sequence". The case that "the adjoining scanning lines are not parallel to each other" includes not only the case that the curved scanning lines are not parallel to each other as in the case of the above-described scanning lines SL1 to SL5 but also the case that the scanning lines themselves are straight but "not parallel to each other". In the microlens array, main scanning is performed on the microlenses by any desired main-scanning light beam, and the microlenses are arranged to follow the scanning line of the main scanning. The expression that the microlenses are arranged to "follow the scanning line" means that the arrangement is structured along the scanning lines. More specifically, in the case that the scanning line is curved, the arrangement of microlenses following the scanning lines is curved to follow the curvature of the scanning line. When the microlenses main-scanned by any one of the curved scanning lines are arranged in the main scanning direction, a curved line smoothly connecting the center of each of the arranged microlenses is referred to as a "main-scanning arrangement line" for the sake of explanatory convenience. When the arrangement of the microlens "perfectly follows the scanning line", the main-scanning arrangement line overlaps with and is parallel to "the scanning line that main-scans the microlens". In an embodiment of the present invention, the main-scanning arrangement line and the scanning line do not need to be perfectly parallel to each other, and in a practical use, the angle between the main-scanning arrangement line and the scanning line may be in the range of approximately "±10 degrees", preferably in the range of approximately "±5 degrees", and more preferably in the range of approximately "±3 degrees".

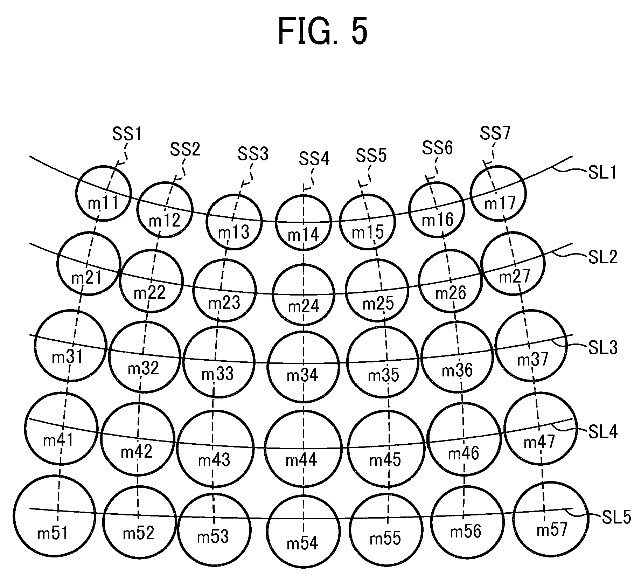

An example of the array arrangement of microlenses is described with reference to FIG. 5 as a schematic diagram, where FIG. 5 illustrates the case that the present embodiment of the present invention is applied to the example of the scanning lines illustrated in FIG. 4A and FIG. 4B

In FIG. 5, reference signs SL1 to SL5 represent "five scanning lines that are adjacent to each other" in the same manner as in the case described referring to FIG. 4A and FIG. 4B. Microlenses m11 to m17 are arranged to follow the scanning line SL1. In other words, the arrangement of the microlenses m11 to m17 follows the curvature of the scanning line SL1. Microlenses m21 to m27 are arranged to follow the scanning line SL2, and microlenses m31 to m37 are arranged to follow the scanning line SL3. In a similar manner, microlenses m41 to m47 are arranged to follow the scanning line SL4, and microlenses m51 to m57 are arranged to follow the scanning line SL5.

In FIG. 5, the "broken curved lines" represented by reference numbers SS1 to SS7 are "sub-scanning arrangement lines" of the microlenses, in other words, are the lines each connecting the arrangement of the microlenses in the sub-scanning direction. The microlens m11 to m51 are arranged on the sub-scanning arrangement line SS1, and the microlenses m12 to m52 are arranged on the sub-scanning arrangement line SS2. In a similar manner, the microlenses m13 to m53 are arranged on the sub-scanning arrangement line SS3, and the microlenses m14 to m54 are arranged on the sub-scanning arrangement line SS4. The microlenses m15 to m55 are arranged on the sub-scanning arrangement line SS5, and the microlenses m16 to m56 are arranged on the sub-scanning arrangement line SS6. Moreover, the microlenses m17 to m57 are arranged on the sub-scanning arrangement line SS7.

Every one of the sub-scanning arrangement lines SS1 to SS7 perpendicularly crosses the group of the scanning lines SL1 to SL5. In other words, the "microlenses mi1 to mi7 (where i = 1 to 5) main-scanned by the light beam are arranged to follow the scanning line SLi (i = 1 to 5) of the main scanning". Since the microlenses are arranged in the above-described manner, the "arrangement of the adjoining microlens is consistently parallel to the main scanning direction at the part that is being main-scanned by the light beam". Therefore, the contrast of the developed moire is made uniform.

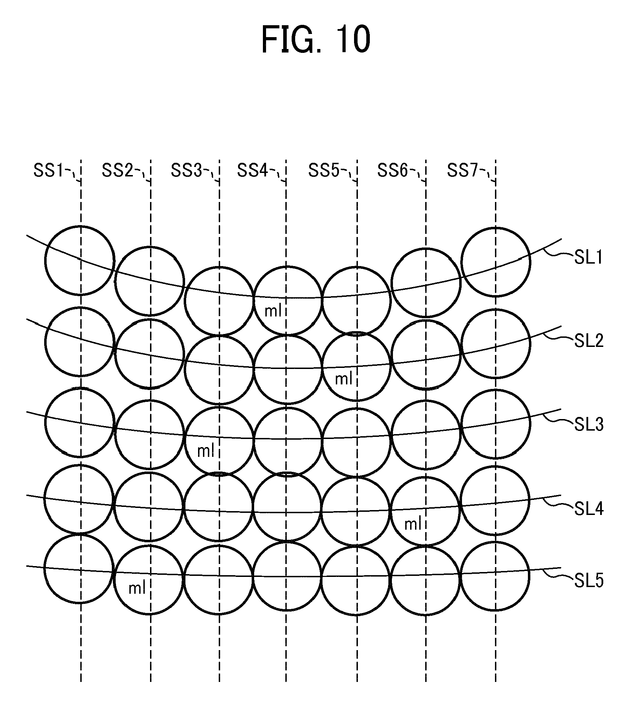

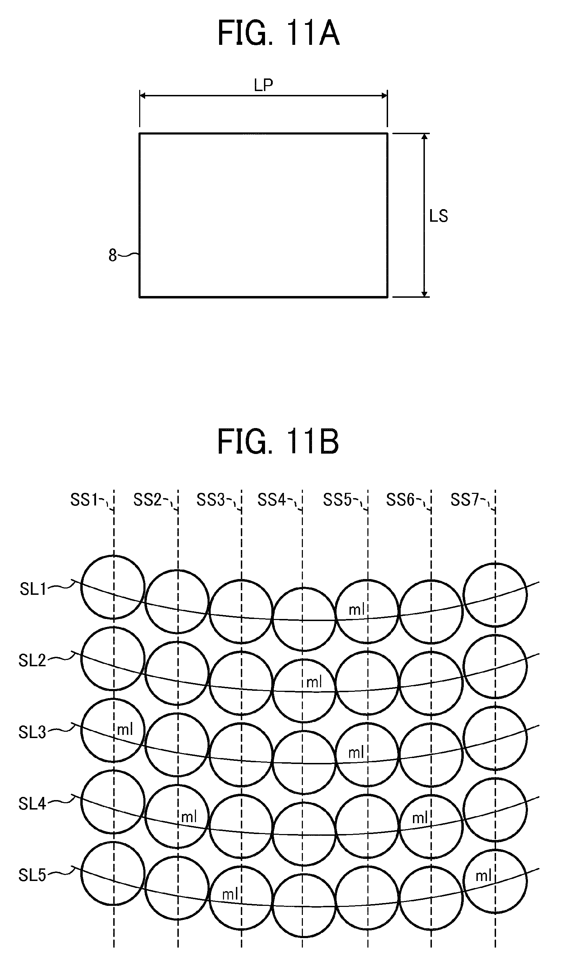

In the example of FIG. 5, the "arrangements of microlenses in the sub-scanning direction perpendicularly cross the scanning lines". Thus, the contrast of the moire related to the sub-scanning direction can be made uniform, and the deterioration of the image quality of the virtual image caused due to the gradation of the moire can effectively be reduced. Note that, the expression that "the sub-scanning arrangement lines perpendicularly cross the scanning line group" means that any one of the sub-scanning arrangement lines perpendicularly crosses all the scanning lines that cross the any one of the sub-scanning arrangement lines. However, the term "perpendicularly cross" does not require the sub-scanning arrangement lines to strictly perpendicularly cross the scanning lines. In a practical use, the crossing angles between the sub-scanning arrangement lines and the scanning lines may be in a range of approximately "90 ±10 degrees", preferably in the range of approximately "90 ± 5 degrees", and more preferably in the range of approximately "90 ± 3 degrees". In the example of FIG. 5, the "arrangement of microlenses in the sub-scanning direction perpendicularly crosses the scanning line". Thus, the sizes of the microlenses mij (i = 1 to 5 and j = 1 to 7) are not uniform, and the "microlens having a larger value of the numeral i" has a larger diameter. In this case, all the microlenses mij may be made uniform. If all of the microlenses mij are made to have the same size and the "arrangement (sub-scanning arrangement lines) of the microlenses in the sub-scanning direction is made perpendicular to the scanning lines", there are developed "spaces along the scanning lines" between the microlenses arranged in the arrangement having the large number i (the arrangements on the lower part of FIG. 5). It is desired that the microlens have small spaces among them, to a certain extent. FIG. 10 is a schematic diagram illustrating another example of the arrangement of the microlens array. In FIG. 10, each of reference numbers m1 represents each microlens. Further, reference signs SL1 to SL5 represent the scanning lines in a similar manner to those of FIG. 3 to FIG. 5, and reference signs SS1 to SS7 represent the "sub-scanning arrangement lines" in a similar manner to those of FIG. 5. In the array arrangement of microlenses illustrated in FIG. 10, the arranged microlenses m1 have "substantially the same size and shape". Further, the sub-scanning arrangement lines SSi (where i = 1 to 7) are parallel to each other and are in the sub-scanning direction (the vertical direction in FIG. 10). Further, the arrangements, of the microlenses m1, in the main scanning direction (main-scanning arrangement line) are parallel to the scanning lines. In this configuration, the intervals between the adjoining microlenses on the sub-scanning arrangement lines are not uniform; however, the "arrangement intervals between the microlenses m1 in the main scanning direction" are uniform. In this case, because the sub-scanning arrangement lines SSi are not perpendicular to the scanning lines SL1 to SL5, the "contrast of the moire related to the sub-scanning direction" is not so uniform as in the example of FIG. 5. However, the contrast of the moire related to the main scanning direction is effectively reduced as the arrangements, of the microlenses m1, in the main scanning direction, follow the curves of the scanning lines. Accordingly, also in this case, it is possible to reduce deterioration, of the image quality of the virtual image, caused by the gradation of the moire. FIG. 5 is a schematic diagram illustrating an example of the arrangement of microlenses. In the microlens array of an embodiment of the present invention, because the "microlenses are arranged to follow the scanning lines", the "size and shape" of each microlens is, in some cases, different depending on the disposed position as illustrated in FIG. 5. The arrangement example in FIG. 5 is not in an "orderly grid pattern" as illustrated in FIG. 4A and FIG. 4B. However, the arrangement is not at random and instead is "regular". In the above examples described based on FIG. 5 and FIG. 10, to make the description simple, the description is given on an arrangement example of the circular shaped microlenses mi1 to mi7 (where i = 1 to 5) and the microlenses m1. Further, another arrangement example will be described referring to FIG. 11A and FIG. 11B. FIG. 11A illustrates an example of the microlens array 8 described based on FIG. 1.

In general, the microlens array 8 is in many cases a "rectangle that is long in the lateral direction corresponding to the main scanning direction" as illustrated in FIG. 11A. The length "LP" illustrated in FIG. 11A represents the length of the microlens array in the main scanning direction, and the length "LS" represents the length in the sub-scanning direction. Although these lengths LP and LS can have various values, the lengths LP and LS are respectively approximately 30 mm and 20 mm in many cases, in general. The size of the microlens m1 is generally approximately 100 $\mu$m to 200 $\mu$m as to be described later, and a discussion will be given on an example in which the microlenses m1 are in the "same circular shape having a diameter of 100 $\mu$m". Further, the light-beam bundle diameter of the light beam LC is assumed to be 120 $\mu$m. In this case, on the microlens array 8 of FIG. 11A and FIG. 11B, there are 300 microlenses and 200 microlenses respectively arranged in matrix in the main scanning direction and the sub-scanning direction. Apart of the array arrangement is illustrated in FIG. 11B. Assume that the two-dimensional array arrangement of the 300 × 200 microlenses m1 is scanned by main scanning with 200 scanning lines. In the case of the optical scanning described based on FIG. 1 and FIG. 2, the scanning lines SL1 to SL5 of the main scanning have "curved shapes that are downwardly convex", as described above and as illustrated in FIG. 11B. In the microlens array, both of (i) the scanning line to scan the uppermost arrangement of 300 microlenses (the scanning line is referred to as the "uppermost scanning line" for the sake of explanatory convenience) and (ii) the scanning line to scan the lowermost arrangement of microlenses (the scanning line is referred to as the "lowermost scanning line" for the sake of explanatory convenience) have curved shapes that are downwardly convex, and to be precise, the curvatures are different among scanning lines, where the uppermost scanning line and the lowermost scanning line have different "degrees of curvature". However, as in the case of the microlens array 8 illustrated in FIG. 11A, the "difference of degree of curvature" between the above uppermost scanning line and the lower most scanning line is small with respect to the size of approximately 30 mm×20 mm. In such a case, if the curvature of the main-scanning arrangement line of the 300 microlenses arranged in the main scanning direction is made to follow the curvature of the scanning line, the curvature of the main-scanning arrangement line can be made to "precisely follow the curvature" of the scanning line, depending on the "position", of the main-scanning arrangement line, "in the sub-scanning direction". However, considering the configuration that the size of each of the microlenses of the microlens array is 100 $\mu$m and that the light-beam bundle diameter of the light beam LC is 120 $\mu$m, even if the curvatures of the main-scanning arrangement line and the scanning line are not strictly the same, it is possible to achieve the state that the scanning line and the main-scanning arrangement line "substantially follow" each other. FIG. 11B illustrates such a situation, where, to be precise, the scanning lines SL1 to SL5 have different "degrees of curvature". However, main-scanning arrangement lines of the microlenses m1 are "parallel in the sub-scanning direction". For example, if the main-scanning arrangement line, of the 200 rows of the main-scanning arrangement lines in the sub-scanning direction, "at the center in the sub-scanning direction" is made to correspond to and follow the scanning line that scans the microlens on this arrangement and if the 200 rows of the main-scanning arrangement lines are made parallel in the sub-scanning direction, neither the difference between the uppermost scanning line and the main-scanning arrangement line at the uppermost row nor the difference between the main-scanning arrangement line on the lowermost row and the main-scanning arrangement line at the lowermost row does not cause a "substantially disadvantageous unevenness" in the contrast of the moire. In the above, the description is given on an example of the microlens array in which the circular shaped microlenses are two-dimensionally arranged in matrix. However, the microlens array is not limited to such an example, and various types of microlens array is possible.

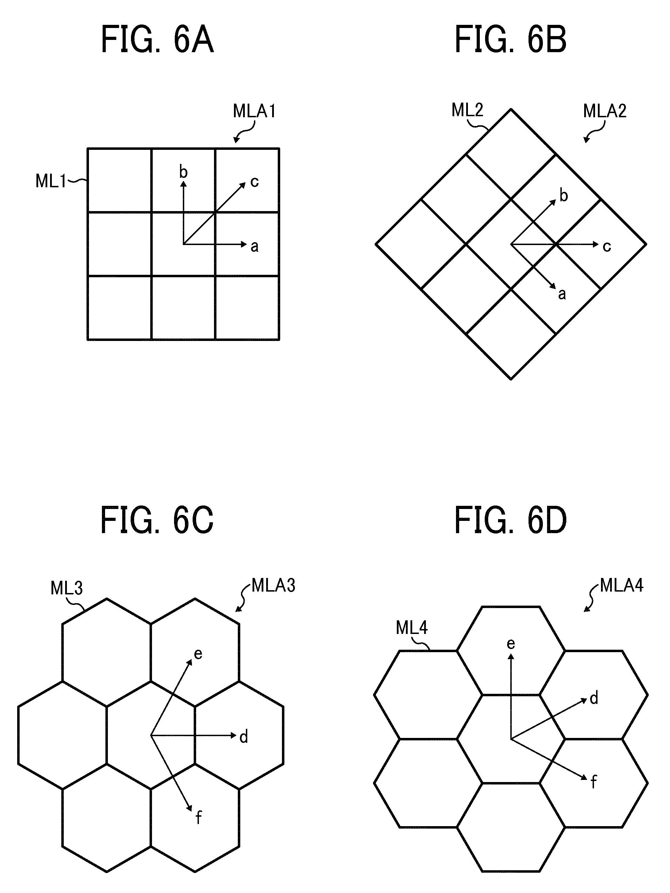

With reference to FIG. 6A to FIG. 6D, some "types of microlens arrays" are exemplified. A microlens array MLA1 illustrated in FIG. 6A is configured with rectangular microlenses ML1 arranged in a square matrix shape and is an example of a "square matrix arrangement". A microlens array MLA2 illustrated in FIG. 6B is configured with rhombic microlenses ML2 arranged in a square matrix shape, and is also an example of a square matrix arrangement. The microlens array MLA2 illustrated in FIG. 6B is a microlens array made by rotating the microlens array MLA1 in FIG. 6A by 45 degrees about an axis perpendicular to the drawing. The arrangement of the rhombic microlens ML2 in this case is referred to as a "rhombic arrangement" for the sake of explanatory convenience.

A microlens array MLA3 illustrated in FIG. 6C is a microlens array in which regular hexagonal-shaped microlenses ML3 are arranged without gaps. This arrangement is referred to as a "vertical honeycomb-type array" for the sake of explanatory convenience. A microlens array MLA4 illustrated in FIG. 6D is a microlens array in which regular hexagonal-shaped microlenses ML4 are arranged without gaps. This arrangement is referred to as a "lateral honeycomb-type array" for the sake of explanatory convenience. The microlens array MLA4 in the lateral honeycomb-type array illustrated in FIG. 6D is made by rotating the microlens array MLA3 illustrated in FIG. 6C in the vertical honeycomb-type array by 30 degrees about an axis perpendicular to the drawing. The vertical honeycomb-type array and the lateral honeycomb-type array are collectively referred to as a "honeycomb-type array". Each one of the microlens arrays MLA1 to MLA4 illustrated in FIG. 6A to FIG. 6D is a schematic diagram illustrating a "partial arrangement of microlenses of the microlens array".

In the microlens arrays MLA1 and MLA2 illustrated in FIG. 6A and FIG. 6B, the three directions indicated by arrows a, b, and c can be thought as the direction of the arrangement of microlenses. In this case, any one of the directions a, b, and c can be used as the "direction that is made to follow the scanning line of the main scanning" in the two-dimensional scanning by the light beam. For example, in the case of the microlens array MLA1 illustrated in FIG. 6A, when the direction of arrow a is made to "follow the scanning line of the main scanning", the microlenses arranged in the direction of arrow b are thus arranged along the sub-scanning arrangement lines. Further, when the direction of arrow c in the microlens array MLA2 illustrated in FIG. 6B is made to follow the scanning line, the microlenses arranged in the "direction perpendicular to arrow c (the vertical direction in FIG. 6B)" are thus arranged along the sub-scanning arrangement lines. In the case of the microlens array MLA3 in the vertical honeycomb-type array in FIG. 6C, when the direction of arrow d is made to "follow the scanning line", there are no microlenses, in this case, arranged in the "direction perpendicular to the scanning line group". In the case of the microlens array MLA4 in the lateral honeycomb-type array in FIG. 6D, when the direction perpendicular to arrow e is made to be the direction following the scanning line, the microlenses arranged in the direction of arrow e are thus arranged along the sub-scanning arrangement lines.

FIG. 6A to FIG. 6D are schematic diagrams illustrating the microlens arrays MLA1 to MLA4. Specifically, in the microlens arrays MLA1 and MLA2 of FIG. 6A and FIG. 6B, the microlenses ML1 and ML2 arranged in two-dimensional areas have the "same square shape". Further, in the microlens arrays MLA3 and MLA4, the arranged microlenses ML3 and ML4 have the "same regular hexagonal shape". In addition, the microlenses ML1 to ML4 in the microlens arrays MLA1 to ML4 are regularly arranged in an" orderly manner" as illustrated in FIG. 6A to FIG. 6D. However, since, in the microlens array according to the present embodiment of the present invention, the microlenses are arranged to "follow the scanning lines", if the scanning lines are curved, the "arrangement is curved". Therefore, also in the microlens array according to the present embodiment of the present invention, the "arrangement form" of the microlenses can be a square matrix arrangement, a rhombic arrangement, or a honeycomb-type array. However, the actual arrangement of microlenses cannot be the same "orderly arrangement" when displaced in parallel, and if the microlenses are arranged close to each other, the size and shape of each of the arranged microlenses are different.

A discussion will be given on the microlens arrays MLA1 to MLA3 of the four microlens arrays MLA1 to MLA4 as illustrated in FIG. 6A to FIG. 6D. In these cases, the direction of arrow a in the microlens array MLA1, the direction of arrow c in the microlens array MLA2, and the direction of arrow d in the microlens array MLA3 all correspond to the direction of the "line segment connecting the centers of adjoining microlenses". Accordingly, the configuration, in which the directions of arrow a, arrow c, and arrow d respectively in the microlens arrays MLA1 to MLA3 are taken as the "directions following the scanning line", can be described as follows. That is, the "line segment connecting the centers of adjoining microlenses constituting any one row arranged in the main scanning direction" is parallel to the scanning line of the light beam that main-scans such microlenses. Further, when, in the microlens arrays MLA1 and MLA4, the lateral direction in the drawing is taken as the direction following the scanning line, the following description can be given. In the microlens array MLA1, each of the arranged microlenses ML1 has a "quadrilateral shape", and in the microlens array MLA4, each of the arranged microlenses ML1 has a "hexagonal shape". Therefore, in the microlens array MLA1, the boundary to the adjacent microlenses is constituted by a "group of four lines", and in the microlens array MLA4, the boundary to the adjacent microlenses is constituted by a "group of six lines". Further, at least one line of the group of four or six lines is parallel to the scanning line of the light beam that main-scans such microlenses.

The condition that the microlens array according to the present embodiment of the present invention should satisfy is that the "microlenses to be main-scanned by arbitrary main scanning of a light beam are arranged to follow the scanning line of the main scanning". In the case of FIG. 6A to FIG. 6D, all of the microlens arrays MLA1 to MLA4 are arranged to satisfy the above condition. Further, in the microlens arrays MLA1 and MLA4, two lines of the line group constituting the boundary to the adjacent microlenses are parallel to the scanning line group. In the microlens arrays MLA1, MLA2, and MLA4, the microlenses are arranged such that the sub-scanning arrangement line, which is the arrangement of microlenses in the sub-scanning direction is perpendicular to the scanning line group by the main scanning. Since, in the arrangement of microlenses in the above configuration, the main scanning of the light beam is performed to follow the "arrangement of microlenses", the magnitude of the "contrast of the moire in the scanning line" is made approximately uniform.

Further, when the sub-scanning arrangement lines of microlenses are "perpendicular to the scanning line group", the magnitude of the "contrast of the moire in the sub-scanning direction" can also be approximately uniform. Therefore, the "gradation of the moire appearing in the virtual image" can be reduced, and deterioration of the image quality is thus effectively reduced. In the case of the microlens array MLA4 described based on FIG. 6D, when the lateral direction is made parallel to the scanning line, the microlenses arranged in the vertical direction (the direction of arrow e) in FIG. 6D are thus arranged in the sub-scanning arrangement line. In this case, as the arrangement of microlenses, other than the arrangements in the direction of the above-described scanning line and in the direction of the sub-scanning arrangement line, there are also arrangements in the directions of arrows d and f. In addition, the arrangement in each of the directions of arrows d and f develops a moire in relation to the scanning lines. Thus, in the case of the microlens array MLA4, the arrangement of microlenses in four directions develops moire.

Since, as is well known, the "total of the light to develop a moire" is constant, the developed moire has lower contrast and is less visible as the microlenses are arranged in more directions. From this point of view, with respect to the microlens arrays MLA1 to MLA4 in FIG. 6A to FIG. 6D, in the case of the microlens arrays MLA1 to MLA3, the number of the microlens arrangements that develop the moire is three, and in the case of the microlens array MLA4, the number of the microlens arrangements that develop the moire is "three in addition to the microlens arrangement in the direction of the scanning line". Accordingly, of the above four types of the microlens arrays MLA1 to MLA4, the microlens array MLA4 develops the moire with the lowest contrast. For this reason, the lateral honeycomb-type array is one of the preferable array arrangements.

In the case that the microlens array MLA2 is taken as an example, when the direction of arrow c is taken as the direction following the scanning line, the microlenses in the direction perpendicular to arrow c are arranged along the sub-scanning arrangement line. Thus, the arrangements of the microlenses arranged in the direction of arrows a and b also develop moire. However, the arrangement of the microlenses arranged in each of the directions of arrows a and b is not in a "straight-line arrangement". Further, the "relative positions" of the microlens neighboring in each of the directions of arrows a and b and the microlens that is currently scanned are similar at every position on the microlens array. Accordingly, the developed moire has a uniform contrast, and there is thus developed no gradation in the moire image. Thus, in the microlens array according to the present embodiment of the present invention, the developed moire has low gradation, and it is possible to effectively reduce the deterioration, of the image quality of the virtual image, caused by moire.

Based on FIG. 3, the example is described above in which the curvature of the scanning line is sequentially smaller from the scanning line SL1 to the scanning line SL5. Such a scanning line group as described above are caused by the scanning method as illustrated in FIG. 2A and FIG. 2B. The scanning method of scanning a microlens array two-dimensionally is not limited to such a manner, and "various scanning methods" can be used for practical HUDs. Hereinafter, there will be described three examples of a "microlens arrangement according to a scanning method".

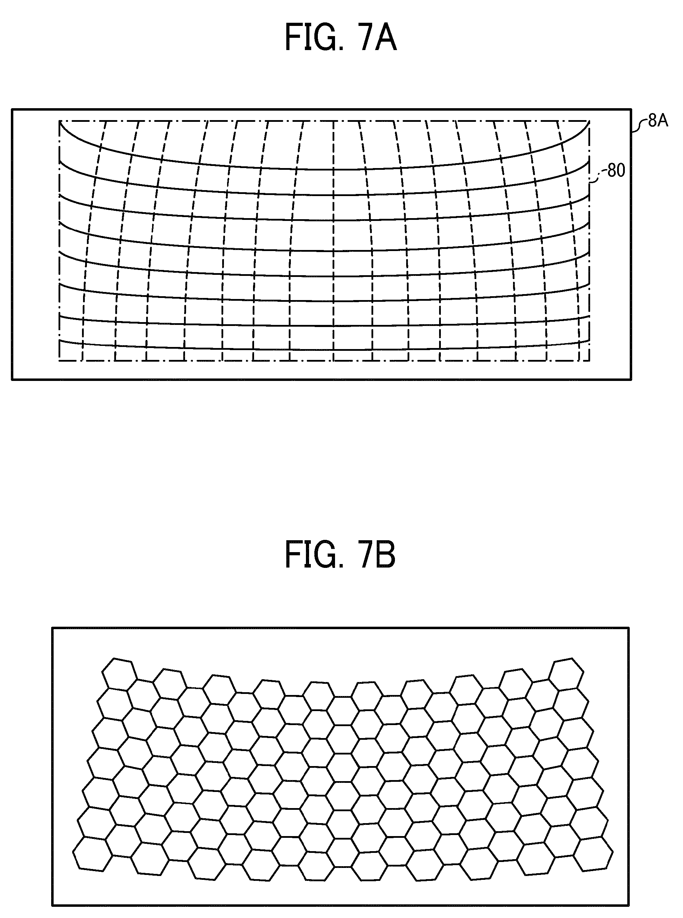

FIG. 7A and FIG. 7B are schematic diagrams illustrating the case in which a microlens array 8A is two-dimensionally scanned by the scanning method illustrated in FIG. 2A and FIG. 2B. FIG. 7A illustrates, by "solid lines", an area 80 of the microlens array 8A that is two-dimensionally scanned by the light beam (hereinafter, referred to as a "to-be-scanned area") and the scanning line group of the light beam to scan the to-be-scanned area 80 and, by "broken lines", the group of sub-scanning arrangement lines. FIG. 7B is a schematic diagram illustrating a two-dimensional array arrangement of microlenses in the above case, where the array arrangement is achieved in a "lateral honeycomb-type array".

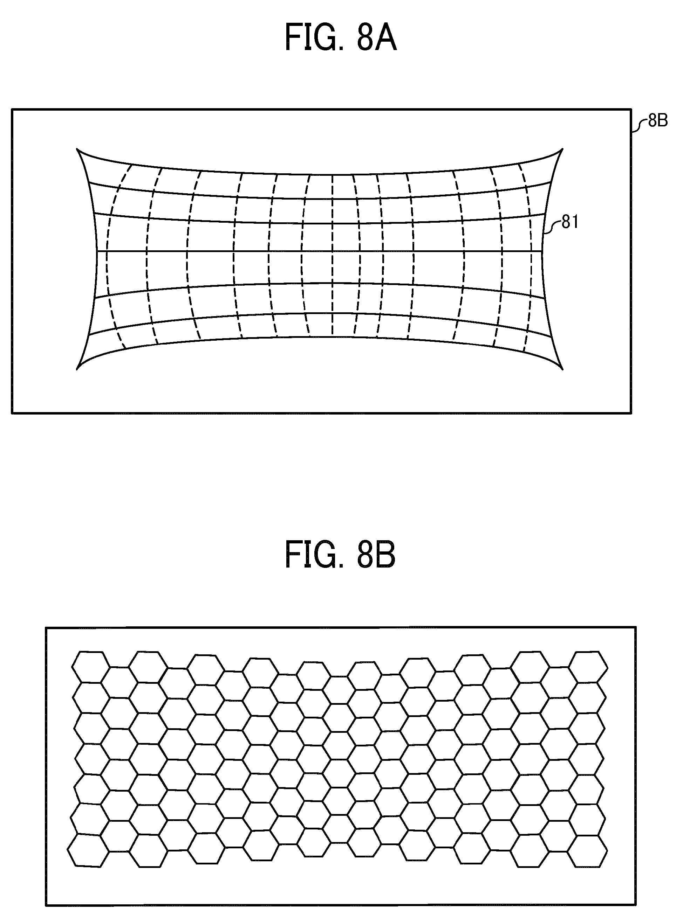

FIG. 8A and FIG. 8B are schematic diagrams illustrating the case that a "bobbin-shaped to-be-scanned area 81" of a microlens array 8B is two-dimensionally scanned. FIG. 8A illustrates, by "solid lines", the scanning line group of the light beam to scan the to-be-scanned area 81 of the microlens array 8B and, by "broken lines", the group of the sub-scanning arrangement lines. FIG. 8B is a schematic diagram illustrating a two-dimensional array arrangement of microlenses in the above case, where the array arrangement is achieved in a "lateral honeycomb-type array". In FIG. 8A and FIG. 8B, the scanning lines in the to-be-scanned area 81 are bobbin-shaped, and the directions in which the arrangements of microlenses are curved are curved in a bobbin-shape in a similar manner.

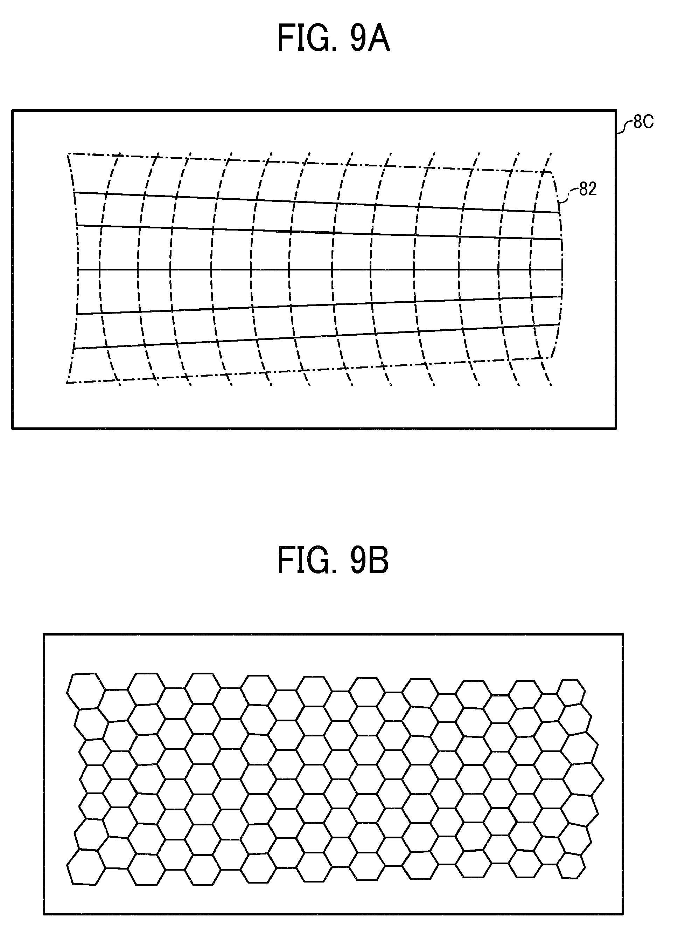

FIG. 9A and FIG. 9B are schematic diagrams illustrating the case that a microlens array 8C is two-dimensionally scanned. FIG. 9A illustrates, by "solid lines", a to-be-scanned area 82 (shape of a tumbled bell-shaped bronze vessel) of the microlens array 8C and the scanning line group of the light beam to scan the to-be-scanned area 82 and, by "broken lines", the sub-scanning arrangement lines. In the case of this example, each of the scanning lines is in an "approximately straight line".

However, these lines are not parallel to each other, and the distances between the adjoining scanning lines are smaller from left to right in FIG. 9B. FIG. 9B is a schematic diagram illustrating a two-dimensional array arrangement of microlenses in the above case, where the array arrangement is achieved in a "lateral honeycomb-type array". As illustrated in FIG. 9A, the arrangement of microlenses is similarly in the "shape of a tumbled bell-shaped bronze vessel", also in the to-be-scanned area 82.

In the cases of the examples illustrated in FIG. 7A to FIG. 9B, the to-be-scanned areas 80, 81, and 82 are not rectangular. Accordingly, the shape of "the original image of a two-dimensional image to be displayed" that is formed on each of the microlens arrays 8A, 8B, and 8C is not rectangular, either.

However, also in these cases, it is possible to form a "rectangular virtual image" by an optical function of the "image forming optical system that forms the virtual image by using the original image as an object". The above description goes for the cases of FIG. 5, FIG. 10, and FIG. 11B.

For example, in the case of the example of FIG. 1, it is possible to form the mirror surface shape of the concave mirror 9, which is the image forming optical system, in a free-form surface such that the concave mirror 9 forms a rectangular virtual image.

Note that each of the microlenses constituting the microlens array may be in a convex shape or may be in a concave shape. The function of each of the microlenses of the microlens array is to diverge the light-beam bundle from the each of the microlenses to the image forming optical system.

With this configuration, as the light reflected by the reflector diverges toward the observer, the observer can visually recognize the virtual image even if the observer changes a viewpoint position.

When the curvature of the convex surface or the concave surface constituting the microlens is set to have a lens surface shape in which the curvature is "larger in the periphery of the microlens than in the central part", the brightness of the virtual image visually recognized by the observer can be "uniform with respect to change in the viewpoint position of the observer".

Note that a microlens array according to the present embodiment of the present invention can be manufactured by, for example, an injection molding method using a molding die or the like. The size of each of the microlenses is, for example, approximately 100 $\mu$m to 200 $\mu$m. The light-beam bundle diameter of the light beam LC may be about the same size as the lens diameter (for example, about double the lens diameter) or is smaller than the lens diameter (for example, not less than about 10% of the lens diameter). In the example described above, it is assumed that the light-beam bundle diameter of the light beam LC is "one to two times the lens diameter of the microlens".

As described above, according to the present embodiment of the present invention, the following microlens array and image display can be achieved.

Item 1: A microlens array includes: microlenses regularly arranged in a two-dimensional area, where the microlens array is two-dimensionally scanned by main scanning and sub-scanning of a light beam. Adjoining scanning lines are not parallel to each other, and the microlenses that are main-scanned by arbitrary main scanning of the light beam are arranged to follow the scanning line of the main scanning (FIG. 5 and FIG. 7A to FIG. 9B).

Item 2: In the microlens array (MLA1, MLA2, and MLA3) according to item 1, a line segment connecting centers of adjoining microlenses in the microlenses constituting an arbitrary row that is arranged in a direction of the main scanning is parallel to the scanning line of the light beam that main-scans the adjoining microlenses.

Item 3: In the microlens array (FIG. 5 and FIG. 7A to FIG. 9B) according to item 1 or 2, the microlenses are arranged such that a sub-scanning arrangement line, which is an arrangement of microlenses in a sub-scanning direction, is perpendicular to a group of the scanning lines of the main scanning.

Item 4: In the microlens array (MLA1 and MLA4) according to any one of items 1 to 3, each of the microlenses has a rectangular shape or a hexagonal shape, a group of four lines or six lines constitute a border between any one of the microlenses and other microlenses that are in contact with the any one of the microlenses, and at least one of the group of the four lines or the six lines is parallel to the scanning line of the light beam that main-scans the any one of the microlenses.

Item 5: In the microlens array (MLA3, MLA4, FIG. 7A to FIG. 9B) according to item 3 or 4, each of the microlenses has a hexagonal shape, and the microlenses are arranged in a honeycomb pattern.

Item 6: In the microlens array (MLA3) according to item 3, each of the microlenses (ML3) has a hexagonal shape, and the microlenses are arranged in a vertical honeycomb-type array.

Item 7: In the microlens array (MLA4 and FIG. 7A to FIG. 9B) according to item 3, each of the microlenses (ML4) has a hexagonal shape, and the microlenses are arranged in a lateral honeycomb-type array. Item 8: A microlens array (FIG. 5, and FIG. 7A to FIG. 9B) includes: microlenses regularly arranged in a two-dimensional area, and arrangement lines of the microlenses regularly arranged in the two-dimensional area are not parallel to each other at least in one direction of the regular arrangement.

Item 9: An image display (FIG. 1) includes: a light source (100) that emits a light beam (LC) to display an image; a deflector (6) that two-dimensionally deflects the light beam; a microlens array (8) that is two-dimensionally scanned by the light beam that is two-dimensionally deflected by the deflector; and an image forming optical system (9) to form, with light from the microlens array, a virtual image (12) of an image to be displayed, where microlens array according to any one of items 1 to 8 is used as the microlens array (8).

Item 10: In the image display (FIG. 1) according to item 9, a light beam with which the image forming optical system (9) forms the virtual image (12) is emitted toward a reflector (10), and the light beam forms the virtual image (12) at a position beyond the reflector.

Item 11: The image display (FIG. 1) according to item 10 is configured as a "head-up display". Item 12: A microlens array (FIG. 5 and FIG. 7A to FIG. 11B) includes: microlenses (ml) regularly arranged in a two-dimensional area. The microlens array is two-dimensionally scanned by main scanning and sub-scanning of a light beam, and the microlenses that are main-scanned by the light beam are arranged to follow a curved scanning line of the main scanning.

The present invention is not limited to the details of the example embodiments described above, and various modifications and improvements are possible. For example, although the embodiment illustrated in FIG. 1 exemplifies the case that the reflector 10 is a "windshield", a "partial reflection mirror (combiner) may be used separately from the windshield".

The advantageous effects described in the embodiments of the present invention are preferred effects provided by the invention, and the preferred effects are just recited; therefore, advantageous effects of the present invention are not limited to the effects described in the embodiments.

[First Embodiment] A first embodiment of the present invention is described below.

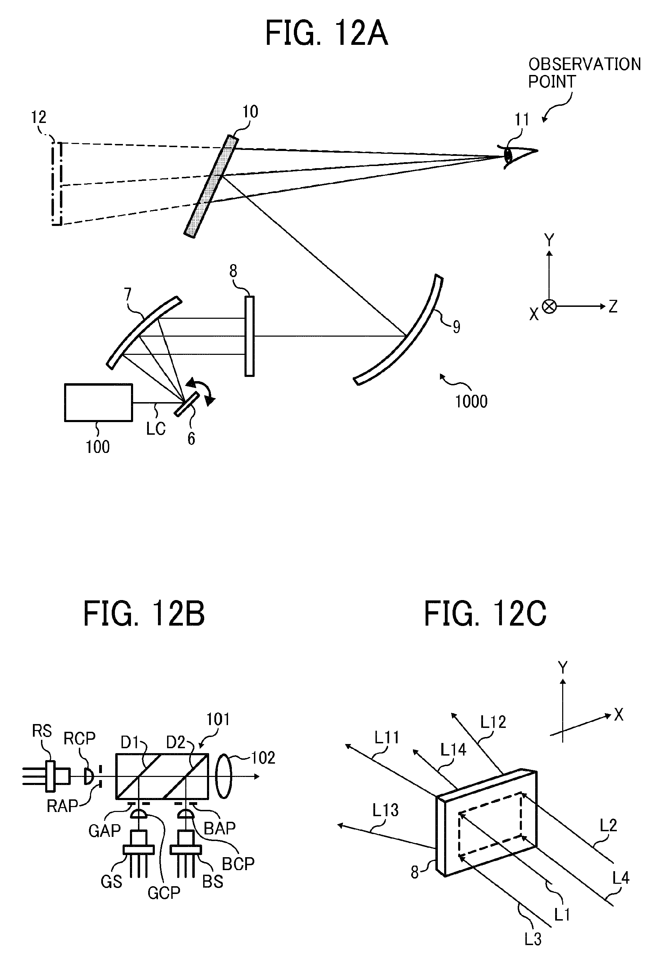

FIG. 12A to FIG. 12C each illustrate a selected portion of an image display apparatus according to the first embodiment of the present invention. An image display apparatus 1000 described with reference to FIGS. 12A to 12C is a heads-up display which displays a two-dimensional color image, and an overall configuration of the device is illustrated in FIG. 12A as a schematic diagram.

The image display apparatus 1000 is provided, for example, for a mobile object such as a vehicle, an aircraft, and a ship, and makes navigation information used for operating the mobile object (for example, speed and mileage) visible through a transmission and reflection member (for example, a front windshield) of the mobile object. In the following description, an XYZ three-dimensional orthogonal coordinate system that is set to the mobile object (i.e., a coordinate system that moves with the mobile object in a synchronized manner) is referred to. Note that the therm "transmission and reflection member" indicates a member that transmits a portion of the incident light and reflects at least some of the remaining incident light.

In FIG. 12A, a light source unit 100 emits a pixel displaying beam LC for displaying a color image in +Z direction.

The pixel displaying beam LC is a bundle of beams in which beams of three colors including red (R), green (G), and blue (B) are combined.

More specifically, the light source unit 100 is configured, for example, as illustrated in FIG. 12B.

In FIG. 12B, semiconductor lasers RS, GS, and BS, which form a light source, emit laser beams of red, green, and blue (RGB), respectively. In the present example embodiment, laser diodes (LD), which are also referred to as end-surface emitting lasers, are used as the semiconductor lasers RS, GS, and BS. Alternatively, vertical cavity-surface emitting lasers (VCSEL) may be used as the semiconductor lasers RS, GS, and BS, instead of the end-surface emitting lasers.

As illustrated in FIG. 1B, coupling lenses RCP, GCP, and BCP control the divergence of the laser beams emitted from the semiconductor lasers RS, GS, and BS.

The laser-beam bundles of RGB colors whose divergence has been controlled by the coupling lenses RCP, GCP, and BCP are shaped by apertures RAP, GAP, and BAP. More specifically, the diameters of the laser-beam bundles of RGB colors are controlled by the apertures RAP, GAP, and BAP.

The shaped laser-beam bundles of RGB colors enter the beam combining prism 101. The beam combining prism 101 includes a dichroic film D1 that transmits the R light and reflects the G light, and a dichroic film D2 that transmits the R and G light and reflects the B light.

Accordingly, a single laser-beam bundle in which the laser-beam bundles of RGB colors are combined is emitted from the beam combining prism 101.

The emitted laser-beam bundle is converted by a lens 102 into a "collimated beam" of prescribed diameter of laser-beam bundle. This "collimated beam" corresponds to the pixel displaying beam LC.

Note that the intensity of the laser-beam bundles of RGB colors that make up the pixel displaying beam LC is modulated according to the image signal (i.e., image data) of a "two-dimensional color image" to be displayed. The intensity modulation may be performed through direct modulation in which the semiconductor lasers are directly modulated or through external modulation in which the laser-beam bundles emitted from the semiconductor lasers are modulated.

In other words, the light-emission intensity of each of the semiconductor lasers RS, GS, and BS may be modulated by a driving unit according to the image signal of RGB components.

The pixel displaying beam LC that is emitted from the light source 100 enters a two-dimensional deflector 6 that serves as an image forming element, and is two-dimensionally deflected. In the present example embodiment, the two-dimensional deflector 6 moves a minute mirror on a pivot that is formed by "two axes that are orthogonal to each other".

More specifically, the two-dimensional deflector 6 consists of micro-electromechanical systems (MEMS) that are formed as a minute pivoting mirror by semiconductor processes or the like.

However, no limitation is intended thereby, and the two-dimensional deflector 6 may be, for example, combinations of two minute mirrors that pivot on a single axis in the directions that are orthogonal to each other. As a two-dimensional deflector, a combination of two MEMS mirrors, a combination of two galvano mirrors, a combination of two polygon mirrors, a combination of any pair of a MEMS mirror, a galvano mirror, and a polygon mirror, may be adopted.

The pixel displaying beam LC which is two-dimensionally deflected as described above enters a concave mirror 7, and is reflected towards a to-be-scanned surface 8.

In other words, the optical effect of the concave mirror 7 is to correct the deformation of an image formed on the reflection plane 10 by the two-dimensionally deflected pixel displaying beam LC. In other words, the pixel displaying beam LC that is reflected at the concave mirror 7 shifts in parallel according to the deflection performed by the two-dimensional deflector 6, and enters the to-be-scanned surface 8 to scan the to-be-scanned surface 8 two-dimensionally.

By performing such a two-dimensional scanning as described above, a "two-dimensional color image" is generated on the to-be-scanned surface 8.

An optical scanner includes the light source unit 100, the two-dimensional deflector 6, the concave mirror 7, and the to-be-scanned surface 8.

As a matter of course, what is displayed on the to-be-scanned surface 8 is "only the pixels that are being irradiated by the pixel displaying beam LC at that time".

A two-dimensional color image is formed as a "set of pixels that are momentarily displayed" realized by two-dimensional scanning using the pixel displaying beam LC. A "two-dimensional color image" is formed on the to-be-scanned surface 8 as described above, and the light of the image data on a pixel by pixel basis enters the concave mirror 9 and is reflected.

The to-be-scanned surface 8 includes a "minute convex lens arrangement", as will be described later. The concave mirror 9 configures a "virtual image forming optical system".

The "virtual image forming optical system" forms the magnified virtual image 12 of the "two-dimensional color image". The reflection plane 10 is provided in front of the image forming position of the magnified virtual image 12 to reflect the light-beam bundle forming the magnified virtual image 12 toward an observer 11 (an eye of the observer is illustrated in FIG. 12A) side. In this case, the concave mirror 9 constitutes a projection optical system which projects the light on a pixel by pixel basis from the to-be-scanned surface 8 towards the reflection plane 10. The observer 11 (for example, a driver of the mobile object) visually recognizes the virtual image at a prescribed observation point (viewpoint) on the optical path of the laser beam reflected by the reflection plane 10 (i.e., transmission and reflection member).

The observer 11 visually recognizes the magnified virtual image 12 by the light reflected towards the observer 11 as above.

As illustrated in FIG. 12A, the up-down direction of the figure is denoted by a "Y direction", and the direction perpendicular to the drawing is denoted by an "X direction".

In FIG. 12A, the Y direction usually corresponds to the up-and-down directions for the observer 11, and the Y-axis direction is also referred to as a "vertical direction".

In FIG. 12A, the X direction usually corresponds to the right and left directions for the observer 11, and the X direction is also referred to as a "lateral direction".

As described above, the to-be-scanned surface 8 has a minute convex lens arrangement. As will be described later, the minute convex lens arrangement has "a plurality of minute convex lenses (microlenses) that are closely arranged at a pitch close to the pitch of pixels". Although the micro-convex lens structure is described in the following description, the same functions and effects can be achieved by a micro-concave lens structure where "a plurality of micro-concave lenses are arranged to be in close contact with each other at a pitch approximate to a pixel pitch".

Herein, the plurality of micro-convex lenses are two-dimensionally arranged at a predetermined pitch along a plane (XY plane) perpendicular to the Z direction such that the convex surface becomes the incident plane. As a specific array form thereof, there are a matrix-shaped array where the X direction is set as a row direction and the Y direction is set as a column direction and a honeycomb-type array.

The planar shape (shape when viewed from the Z-axis direction) of each micro-convex lens is, for example, a circle, a regular N-gon (N is a natural number equal to or greater than 3), or the like. Herein, the micro-convex lenses have the same curvature (radius of curvature).

Each of the minute convex lenses isotropically diffuses the pixel displaying beam LC. In other words, each of the minute convex lenses has even diffusing power in all directions. Such "diffusing function" is briefly described below.

FIG. 12C illustrates four pixel displaying beams L1 to L4 that enter the to-be-scanned surface 8, according to the present example embodiment.

The four pixel displaying beams L1 to L4 enter the to-be-scanned surface 8 at the four corners of the two-dimensional image formed on the to-be-scanned surface 8.

As the four pixel displaying beams L1 to L4 passes through the to-be-scanned surface 8, the pixel displaying beams L1 to L4 are converted into beams L11 to L14.

Assuming that a laser-beam bundle whose cross section is a horizontally oriented quadrangle surrounded by the pixel displaying beams L1 to L4 enters the to-be-scanned surface 8, such a laser-beam bundle becomes a "divergent laser-beam bundle whose cross section is a horizontally-oriented quadrangle surrounded by the beams L11 to L14".

The function of the minute convex lenses as described above is referred to as the "diffusing function".

The "divergent laser-beam bundle whose cross section is a horizontally-oriented quadrangle surrounded by the beams L11 to L14" is obtained by temporally collecting the pixel displaying beam that has been converted into a divergent laser-beam bundle as described above.

The pixel displaying beam is diffused such that "the laser-beam bundle reflected at the reflection plane 10 irradiates a wider area in the proximity of an eye of the observer 11".

When the diffusing function described above is not available, the laser-beam bundle reflected at the reflection plane 10 irradiates only a "small area in the proximity of an eye of the observer 11".

For this reason, when the observer 11 moves his/her head and the position of the eyes deviates from the "small area", the observer 11 can no longer visually recognize the magnified virtual image 12.

By diffusing the pixel displaying beam as described above, the laser-beam bundle reflected at the reflection plane 10 irradiates a "wide area in the proximity of an eye of the observer 11".

Accordingly, even if the observer 11 "slightly moves his/her head", the observer can visually recognize the magnified virtual image with reliability.

As described above, in the present embodiment, the pixel displaying beam LC that enters the to-be-scanned surface 8 is a collimated beam. However, the beam becomes a divergent beam after the beam has passed through the to-be-scanned surface 8.

In the present embodiment, the to-be-scanned surface 8 has a "micro-convex lens structure" where a plurality of micro-convex lenses that diffuse the pixel displaying beam LC are arranged to be in close contact with each other at a pitch approximate to a pixel pitch".

The micro-convex lens is larger than the "beam diameter of a pixel displaying beam LC".

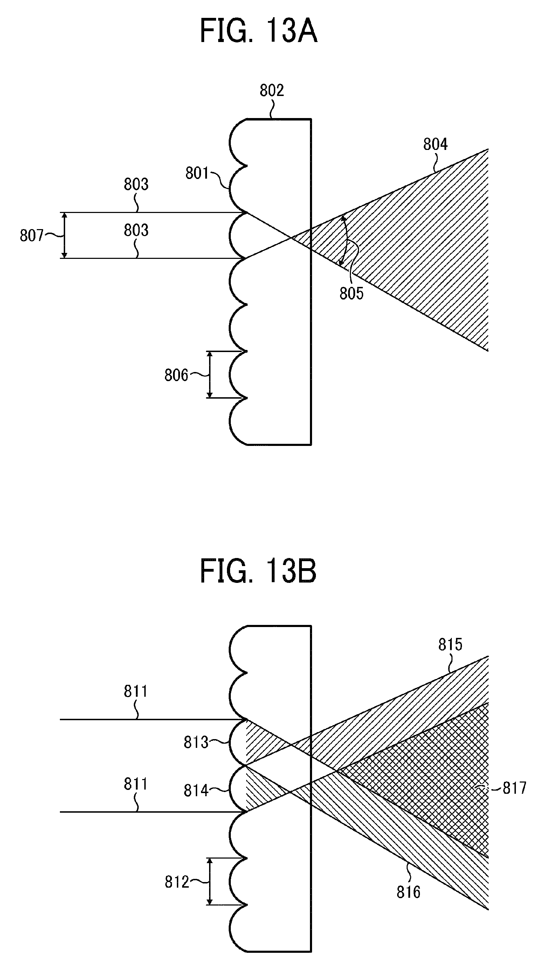

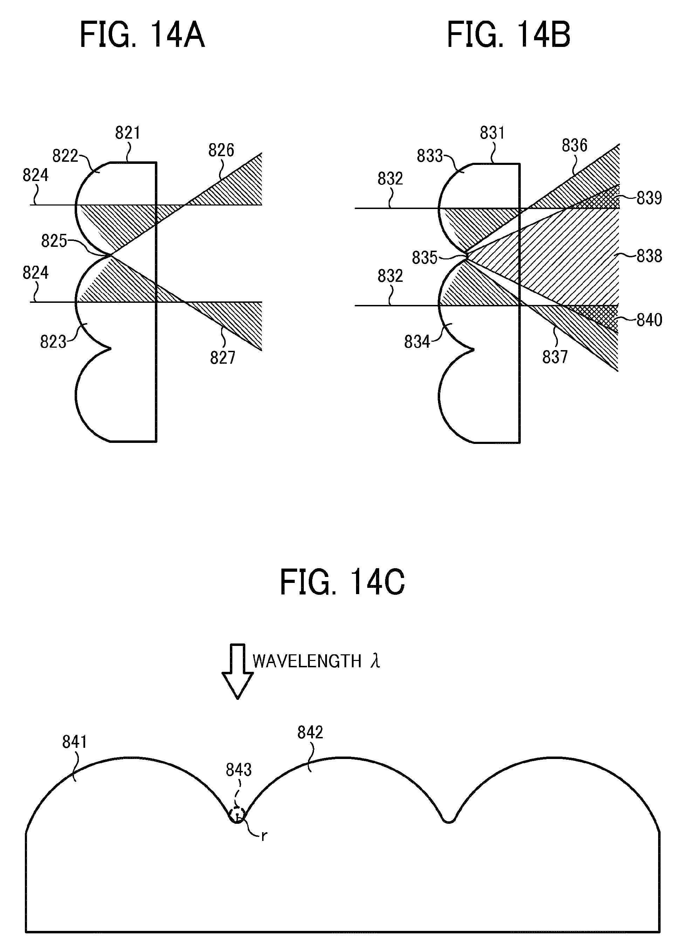

The minute convex lens is made larger than the "beam diameter of the pixel displaying beam LC" to reduce the coherent noise, and the reason is described with reference to FIG. 13 and FIG. 14.

In FIG. 13A, a to-be-scanned surface 802 is illustrated. The to-be-scanned surface 802 has a micro-convex lens structure where micro-convex lenses 801 are arranged.

A laser-beam bundle diameter 807 of a pixel displaying beam 803 as illustrated in FIG. 13A is smaller than a size of the micro-convex lens 801.

In other words, the size 806 of the micro-convex lens 801 is larger than the light-beam bundle diameter 807. Note that, the pixel displaying beam 803 according to the present embodiment is a laser-beam bundle and has a light intensity distribution of a Gaussian distribution around the center of the laser-beam bundle. Accordingly, the light-beam bundle diameter 807 is a distance in the radial direction of a laser-beam bundle, where the light intensity in the light intensity distribution decreases down to "1/e2". In FIG. 13A, the laser-beam bundle diameter 807 is drawn to have a size equal to the size 806 of the micro-convex lens 801. However, the size of the laser-beam bundle diameter 807 is not necessarily equal to the "size 806 of the micro-convex lens 801". The light-beam bundle diameter 807 is satisfactory as long as its size does not exceed the size 806 of the micro-convex lens 801.

In FIG. 13A, the entire pixel displaying beam 803 is incident on the one micro-convex lens 801 and is converted to a diffused laser-beam bundle 804 having a divergent angle 805.

Note that the "divergence angle" may be referred to as a "diffusion angle" in some cases.

In the state of FIG. 13A, the number of the diffused laser-beam bundle 804 is one, and thus there is no interfering laser-beam bundle. Accordingly, there is no coherent noise (speckle noise) developed.

Note that the size of the divergence angle 805 may be set by adjusting the shape of the micro-convex lens 801 as appropriate.

In FIG. 13B, the laser-beam bundle diameter of the pixel displaying beam 811 is two times wider than the array pitch 812 of the micro-convex lenses, and the pixel displaying beam 811 is incident upon both two micro-convex lenses 813 and 814 in an extended manner.

In this case, the pixel displaying beam 811 is dispersed into two dispersed laser-beam bundles 815 and 816 by the two micro-convex lenses 813 and 814 the pixel displaying beam enters.

The two dispersed laser-beam bundles 815 and 816 overlap each other in an area 817 to interfere with each other in this portion, so that coherent noise occurs.

FIG. 14A illustrates a state that a pixel displaying beam 824 is incident across two micro-convex lenses 822 and 823 of a to-be-scanned surface 821.

The laser-beam bundle diameter of the pixel displaying beam 824 is equal to the size of the micro-convex lens 822 or the like. In this case, the beam portion incident on the micro-convex lens 822 becomes a dispersed laser-beam bundle 826 to be diffused, and the beam portion incident on the micro-convex lens 823 becomes a dispersed laser-beam bundle 827 to be diffused.

The dispersed laser-beam bundles 826 and 827 are diffused in such a direction that the fluxes are separated away from each other, and thus, the fluxes do not overlap each other. Accordingly, in this state, coherent noise does not occur.

In other words, if the beam diameter of the pixel displaying beam 824 is set to be equal to or smaller than the size of the micro-convex lens 822, the coherent noise due to the laser-beam bundle diffused by the micro-convex lens does not occur.

An example of specific numerical values of the diameter of the micro-convex lens and the beam diameter of the pixel displaying beam incident on the to-be-scanned surface is described.

For example, the beam diameter of the pixel displaying beam is easily set to be about 150 $\mu$m.

In this case, the size of the micro-convex lens constituting the micro-convex lens structure is favorably set to be the above-described size of 150 $\mu$m or more, for example, 160 $\mu$m, 200 $\mu$m, or the like.

In the to-be-scanned surface 821 illustrated in FIG. 14A, the micro-convex lenses 822, 823, and so on are arranged without gap.

Accordingly, a "width of the boundary portion (hereinafter, this may be referred to as a "boundary width") of the adjacent micro-convex lens surfaces is 0". For this reason, only the dispersed laser-beam bundles 826 and 827 are generated from the pixel displaying beam 824 that enters the micro-convex lenses 822 and 823 as illustrated in FIG. 14A.

However, in an actually-formed micro-convex lens structure, there is no case where the "boundary width between the adjacent micro-convex lenses is 0".

In other words, similarly to a to-be-scanned surface 831 illustrated in FIG. 14B, in an actually-formed micro-convex lens structure, there is no case where the "width of a boundary portion 835 between micro-convex lenses 833 and 834 is 0".

In the boundary portion 835 between the micro-convex lenses 833 and 834, microscopically, a "curved surface is formed to be smoothly continuous", and thus, a curved surface is formed in the boundary portion 835.

If the pixel displaying beam is incident on this portion, the curved surface formed in the boundary portion 835 in this manner functions as a "micro-lens surface" with respect to the incident light.

Accordingly, the pixel displaying beam 832 incident across the micro-convex lenses 833 and 834 causes a dispersed laser-beam bundle 838 as well as dispersed laser-beam bundles 836 and 837 to be generated.

The dispersed laser-beam bundle 838 occurs due to the lens function of the curved surface of the boundary portion 835 and overlaps and interferes with the dispersed laser-beam bundles 836 and 837 in areas 839 and 840, so that coherent noise occurs.

FIG. 14C is a diagram illustrating "reduction and prevention of the coherent noise" in a micro-convex lens structure, according to the present embodiment.

In the micro-convex lens structure, a curved-surface shape itself of a boundary portion 843 where lens surfaces of micro-convex lenses 841 and 842 are gently connected forms a "micro-lens surface".

The radius of curvature of the curved-surface shape of the boundary portion 843 is denoted by r as illustrated in FIG. 14C.

In the present embodiment, for the purpose of simplification, a pixel displaying beam incident on the micro-convex lens structure is referred to as a "wavelength-$\lambda$ monochrome laser-beam bundle".

In a case where the radius of curvature r of the boundary portion 843 is larger than the wavelength λ of the pixel displaying beam (r > λ), the curved surface having a radius of curvature r has a lens function on the incident pixel displaying beam.

Accordingly, in this case, the beam component passing through the boundary portion 843 diverges and overlaps and interferes with the laser-beam bundles diffused by the micro-convex lenses 841 and 842, so that coherent noise occurs.

On the other hand, if the radius of curvature r of the boundary portion 843 is smaller than the wavelength λ of the pixel displaying beam, the boundary portion 843 has a "sub-wavelength structure" with respect to the pixel displaying beam. As known in the art, the sub-wavelength structure does not cause a lens function on the "light having a wavelength larger than the sub-wavelength structure". Accordingly, the boundary portion 843 having a radius of curvature r smaller than the wavelength λ does not function as a "lens" but straightly transmits the pixel displaying beam without divergence.

Accordingly, the beam portion straightly passing through the boundary portion 843 and the dispersed laser-beam bundles diffused by the micro-convex lenses 841 and 842 does not overlap each other, so that the coherent noise due to interference does not occur.

In other words, the order among the beam diameter d of the pixel displaying beam, the wavelength λ, the size D of the micro-convex lens, and the radius of curvature r of the surface constituting the boundary portion are favorably defined as follows. $D > d$
$λ > r$

In a case where the two-dimensional magnified virtual image which is to be displayed is monochrome image, the pixel displaying beam is formed by monochromatic coherent light having a wavelength λ. Accordingly, in this case, the D, d, r, and λ are set so as to satisfy the above-described order, so that the coherent noise can be suppressed.

As in the present embodiment, in the case of displaying a two-dimensional color image (magnified virtual image), the pixel displaying beam LC is a combination of beams of three colors of red, green, and blue (RGB).

When the wavelengths of the three beams are denoted by $λR$ (= 640 nm), $λG$ (= 510 nm), and $λB$ (= 445 nm), the order is that "$λR > λG > λB$".

Accordingly, with a view to preventing coherent noise, the radius of curvature r of the surface constituting the boundary portion is favorably set to be smaller than the shortest wavelength $λB$, for example, to be 400 nm.

However, if the radius of curvature r is set to be smaller than the longest wavelength $λR$ (for example, to be 600 nm), the coherent noise due to the R component of the image display beam can be prevented.

In other words, the coherent noise can be effectively reduced.

If "r (for example, 500 nm) < $λG$" is set, the coherent noise due to the R-component and G-component beams of the image display beam can be prevented. In a case where the pixel displaying beam LC is a "combination of beams of three colors of red, green, and blue (RGB)", the coherent noise occurs independently with respect to the three color components. The whole of the independent coherent noise due to the beams of three colors of red, green, and blue (RGB) becomes visually-recognizable coherent noise. Accordingly, among the coherent noise due to three colors, if any coherent noise due to one color disappears, the visually-recognizable coherent noise is greatly improved, which contributes to improvement of image quality of an observation image. Accordingly, with respect to the effect of prevention of coherent noise, the effect can be obtained in associated with only the "longest-wavelength R component" among the three color components, and next, the "reduction effect" is improved in the order of the G component and the B component. Therefore, if the radius of curvature r is set to be smaller than the longest wavelength $λR$ (for example, to be 600 nm), in addition to the reduction of coherent noise, a certain effect can be achieved. With respect to the visibility of the coherent noise, noise intensity varies with the wavelength, the beam diameter, the multi/single modes, or the like, but in general, the visibility is increased in the order of $R ≈ G > B$. In other words, the visibility of a human eye is low with respect to the light having a wavelength $λB$, and thus the coherent noise is difficult for human eye to visually recognize. Accordingly, if the radius of curvature r is set to be smaller than the wavelength $λG$ (for example, to be 500 nm), the coherent noise due to the light having wavelengths $λR$ and $λG$ of which visibility is relatively high can be reduced. Although the coherent noise due to the light having wavelength $λB$ of which visibility is low occurs, the coherent noise is not securely visually recognizable. As a matter of course, if the radius of curvature r is set to be smaller than the wavelength $λB$ (for example, to be 400 nm), as described above, the coherent noise can be more effectively reduced.

Each size of the plurality of micro-convex lenses constituting the micro-convex lens structure is in the order of 100 μm as described above, and this can be implemented as a known "micro-lens".

In addition, the micro-convex lens structure where the plurality of micro-convex lenses are arranged can be implemented as a "micro-lens array".

For this reason, the micro-convex lens is sometimes may be referred to as a "microlens", and the micro-convex lens structure may be referred to as a "micro-lens array".

As known in the art, the micro-lens array is manufactured by producing a mold having a transfer surface of a lens surface array of the micro-lens array and transferring a mold surface to a resin material by using the mold. With respect to formation of the transfer surface of the mold, there is well known a method of forming the transfer surface by using cutting, photolithography, and the like.

In addition, the transferring of the transfer surface to the resin material can be performed, for example, by injection molding.

The reduction of the radius of curvature of the boundary portion between the adjacent micro-lenses can be implemented by reducing the boundary width. The small boundary width can be implemented by "sharpening" the boundary portion formed between the adjacent microlens surfaces.

In the mold for micro-lens array, as a method of reducing the size of the "boundary width between the adjacent micro-lenses" down to the order of wavelength, there are known various methods.

For example, JP-4200223-B discloses a method of increasing the radius of curvature of each micro-lens by anisotropic etching and ion processing to remove non-lens portions of the boundary portion.

In addition, JP-5010445-B discloses a method of removing a flat surface between adjacent micro-lenses by using isotropic dry etching.

For example, by using the above-described well-known methods, it is possible to manufacture a micro-lens array where the radius of curvature of the surface constituting the boundary portion between the adjacent micro-lenses is sufficiently small. In other words, the above-described to-be-scanned surface can be configured as a micro-lens array having a structure where a plurality of micro-lenses are arranged to be in close contact with each other. By forming the micro-lens array where the radius of curvature r of the surface constituting the boundary portion between the adjacent micro-lenses is smaller than 640 nm, the coherent noise due to the R component beam can be prevented. In addition, by forming the micro-lens array where the radius of curvature r is smaller than 510 nm, the coherent noise due to the R component beam and the G component beam can be prevented. By forming the micro-lens array where the radius of curvature r of the surface constituting the boundary portion between the adjacent micro-lenses is smaller than 455 nm, the coherent noise due to the R, G, and B component beams can be prevented.

Previously, the image display apparatus (heads-up display) illustrated in FIG. 12A to FIG. 12C was described.

The concave mirror 7 illustrated in FIG. 12A to FIG. 12C has a "function of removing the distortion of the image formed on the reflection plane 10 by the pixel displaying beam LC which is two-dimensionally deflected". In other words, the concave mirror 7 functions as a "deflection range restriction means of restricting a scan range of the to-be-scanned surface by adjusting a deflection range of the pixel displaying beam which is two-dimensionally deflected.

In a case where a deflection angle of the pixel displaying beam which is two-dimensionally deflected by the two-dimensional deflector 6 is not greatly large, the deflection range restriction means may be omitted.

Conditions of the micro-convex lens structure (micro-lens array) and the micro-convex lenses (micro-lenses) are the same as those described above.

In other words, "a micro-convex lens structure is configured so that a plurality of micro-convex lenses which are larger than a beam diameter of a pixel displaying beam are arranged to be in close contact with each other at a pitch approximate to a pixel pitch".

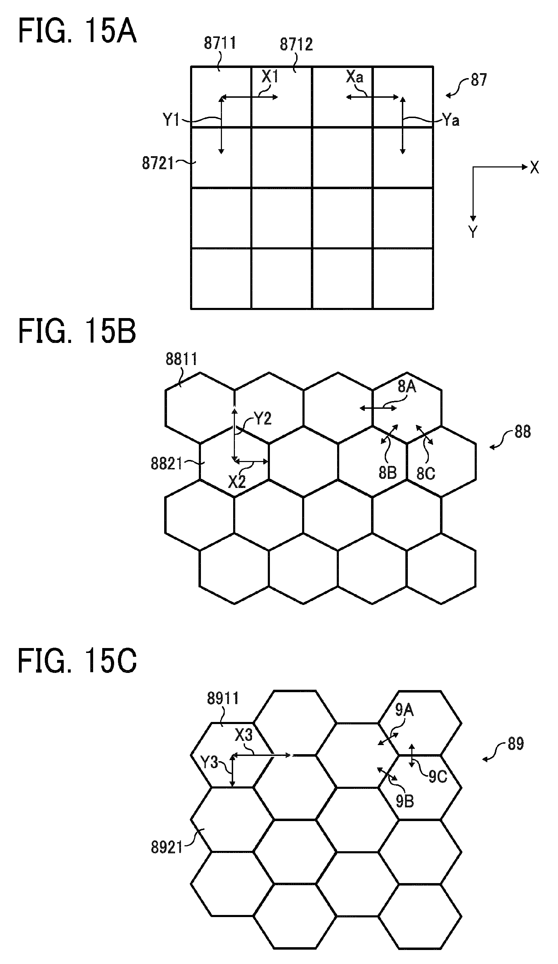

Herein, three examples of specific forms of the micro-lens array satisfying the conditions are illustrated in FIG. 15A to FIG. 15C. A micro-lens array 87 as a form example illustrated in FIG. 15A is configured so that square-shaped micro-lenses 8711, 8712, and so on or the like are arranged in a square matrix shape.

The number of pixels of a two-dimensional image (magnified virtual image) displayed in the heads-up display is determined by an arrangement cycle of the micro-lenses in the microlens array.

In the array of FIG. 15A, the distance between the centers of micro-lenses 8711 and 8712 adjacent to each other in the X-axis direction is denoted by X1.

Moreover, in FIG. 15A, the distance between the centers of the micro-lenses 8711 and 8721 adjacent to each other in the Y-in the Y-axis direction is denoted by Y1. The X1 and Y1 can be regarded as an "effective size of one pixel".

In the following description, the "effective size of one pixel" may be referred as an "effective pitch of one pixel" or an "effective pixel pitch".

A micro-lens array 88 as a form example illustrated in FIG. 15B is configured so that regular hexagonal-shaped micro-lenses 8811, 8821, and so on are arranged to be in close contact with each other.

In the micro-lens array of this case, the arranged micro-lenses 8811 and the like do not have sides parallel to the X-axis direction.

In other words, since upper sides and lower sides of the micro-lenses arranged in the X-axis direction have a "zigzag shape", the array is called a "zigzag-type array".

A micro-lens array 89 as a form example illustrated in FIG. 15C is configured so that regular hexagonal-shaped micro-lenses 8911, 8921, and so on are arranged to be in close contact with each other.

In the micro-lens array of this case, the arranged micro-lenses 8911 and the like have sides parallel to the X-axis direction. The array of this case is called an "armchair-type array".

The zigzag-type array and the armchair-type array may collectively be called a "honeycomb-type array".

The armchair-type array illustrated in FIG. 15C is an array obtained by rotating the zigzag-type array illustrated in FIG. 15B by 90 degrees. In the zigzag-type array, in the microlens array, X2 illustrated in FIG. 15B can be regarded as an "effective pixel pitch in the X-axis direction", and Y2 can be regarded as an "effective pixel pitch in the Y-axis direction".

In the armchair-type array, X3 illustrated in FIG.

15C can be regarded as an "effective pixel pitch in the X-axis direction", and Y3 can be regarded as an "effective pixel pitch in the Y-axis direction".

In FIG. 15B, the effective pixel pitch Y2 is a distance between the center of the microlens 8821 and the central point of the right side of the micro-lens 8811.

In FIG. 15C, the effective pixel pitch X3 is a distance between the central point of the side with which two micro-lenses contacting the right side of the micro-lens 8911 are in contact and the center of the micro-lens 8911.

In the zigzag-type array, since the effective pixel pitch in the X-axis direction X2 is small, the resolution in the image display in the X-axis direction can be improved.

In addition, in the armchair-type array, the resolution in the Y-axis direction can be improved.

As described above, by arranging the microlenses in a honeycomb type, the pixels which are smaller than an actual lens diameter can be effectively represented, so that the number of effective pixels can be increased.

As described above in the micro-convex lens structure (micro-lens array) of the to-be-scanned surface, the boundary portion between the adjacent microlenses has a radius of curvature r.

The radius of curvature r is smaller than, for example, the wavelength λR of the R component of the pixel displaying beam.

Accordingly, as described above, the "coherent noise due to interference of the coherent light of the R component" is prevented.

However, if the radius of curvature r is larger than the wavelength λG of the G component beam and the wavelength λB of the B component beam of the pixel displaying beam, these beams are diffused in the boundary portion to interfere with each other.

Accordingly, the coherent noise occurs due to the interference.

In this case, in the "square-matrix-shaped array" of FIG. 15A, the divergence (diffusion) in the boundary portion occurs in two directions of Xa and Ya directions of FIG. 15A, which causes the coherent noise.

By contrast, in the array of FIG. 15B, the divergence of the boundary portion occurs in three directions 8A, 8B, and 8C. In the case of FIG. 15C, the diffusion occurs in three directions 9A, 9B, and 9C.

In other words, in the square-matrix-shaped array, the divergence in the boundary portion occurs in two directions, and in the honeycomb-shaped array, the divergence occurs in three directions.

Accordingly, in the square-matrix-shaped array, the coherent noise occurs in two directions, and in the honeycomb-shaped array, the coherent noise occurs in three directions.

In other words, the generated coherent noise is "dispersed in two directions" in a square-matrix-shaped array, whereas the generated coherent noise is "dispersed in three directions" in a honeycomb-shaped array.

The maximum intensity of the coherent light generating the coherent noise is constant. Accordingly, as the number of dispersion directions becomes large, the "contrast of the generated coherent noise" can be allowed to be weak, so that the coherent noise is difficult to visually recognize (inconspicuous).

Accordingly, in a case where the generation of the "coherent noise due to the component having a wavelength smaller than the radius of curvature r of the boundary portion" is allowed, the micro-lens array is favorably set to a "honeycomb-shaped array".

When the boundary width is larger than the wavelength λR, the coherent noise due to the coherent light of the R component is also generated.

However, the "boundary width between the lens surfaces" of the adjacent micro-convex lenses is small, and the light energy of the coherent light incident on the portion having a small boundary width is small.

Accordingly, the light energy generating the coherent noise is not large. Moreover, even if the coherent noise is generated, even in the case of a honeycomb-shaped array, as described above, the coherent noise is dispersed in three directions, so that the contrast becomes weak.

Accordingly, the visibility of the coherent noise is effectively reduced.

As described with reference to FIG. 12A, a virtual image forming optical system that forms the two-dimensional magnified virtual image 12 is configured with the concave mirror 9.

In other words, the magnified virtual image 12 is a set of pixel images formed by the concave mirror 9. If the micro-lenses as the micro-convex lenses are allowed to have an "anamorphic function", the diffusion function of the micro-convex lens can be allowed to be different between directions perpendicular to each other.

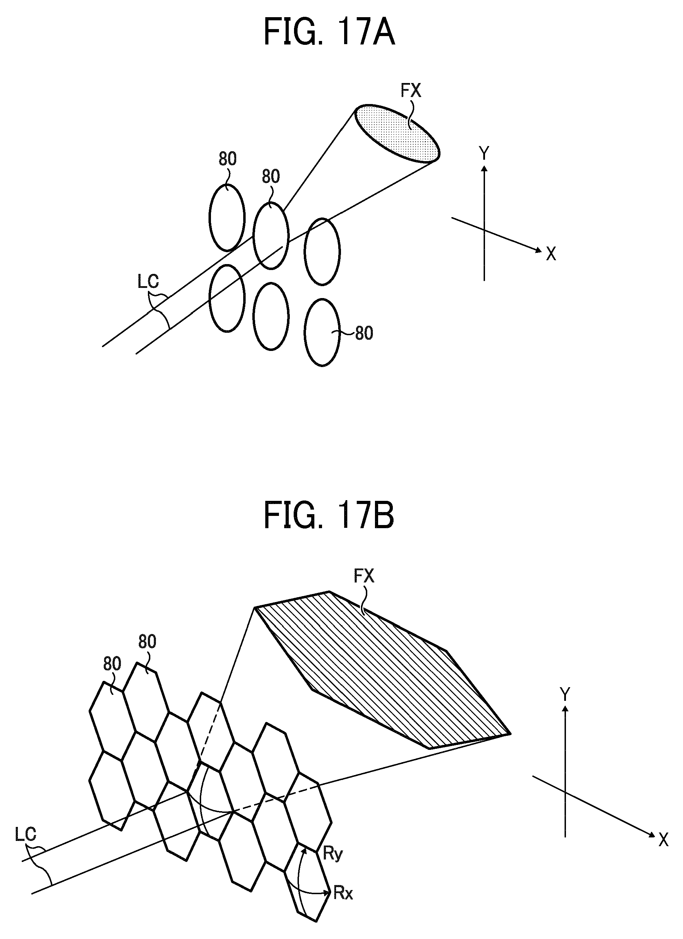

FIG. 17A and FIG. 17B are schematic diagrams each illustrating microlenses 80 (micro-convex lenses) that are formed to be in close contact with each other in the to-be-scanned surface 8. In the example of FIG. 17A, the micro-convex lenses have a vertically-elongated elliptic shape and are arranged in a matrix-shaped array. In the example of FIG. 17B, the micro-convex lenses 80 have vertically oriented hexagon shapes having sides parallel to the X-axis direction and are arranged in an "armchair-type array". In the micro-convex lens 80, the radius of curvatures of the lens surface are different between the X direction and the Y-axis direction, and the radius of curvature in the Y-axis direction Rx is smaller than the radius of curvature in the X-axis direction Ry. In other words, the curvature of the micro-convex lens 80 in the X-axis direction is greater than the curvature in the Y-axis direction.

Accordingly, the power (dispersing power) of the micro-convex lens 80 in the X-axis direction is greater than the power (dispersing power) in the Y-axis direction. As the lens surface has curvatures in both of the X-axis direction and the Y-axis direction, as illustrated in FIG.

17B, the micro-convex lens can be formed to have a hexagon shape, so that the "visibility of the coherent noise" can be weakened as described above. FIG. 17A and FIG. 17B illustrate the cases where the pixel displaying beam LC enters one of the micro-convex lenses 80. In FIG. 17A and FIG. 17B, the width of each of the micro-convex lens 80 in the Y-axis direction is wider than the width in the X-axis direction.

As illustrated in FIG. 17A, the pixel displaying beam LC is formed as an "elliptic shape where the beam diameter thereof is long in the Y-axis direction", and the laser-beam bundle diameter in the Y-axis direction is set to be smaller than the diameter of the micro-convex lens 80 in the Y-axis direction. In such a configuration, the pixel displaying beam LC can be allowed to be "incident without crossing the lens boundary", and the shape of the cross section of the emitting dispersed laser-beam bundle has a (horizontally-oriented) elliptic shape where the beam diameter is long in the X-axis direction.

If the curvature in the X-axis direction is greater than the curvature in the Y-axis direction irrespective of the length of the micro-convex lens in the Y-axis direction and the X-axis direction, in the cross-section FX of a laser-beam bundle of the diverging beam emitted from each micro-convex lens, the diameter in the Y-axis direction is longer than the diameter in the X-axis direction. In other words, the beam is horizontally oriented.

The HUD as described above may be provided, for example, for a vehicle such as a car, and the X-axis direction and the Y-axis direction indicate "the right and left directions with reference to a driver's seat" and "the up-and-down directions with reference to the driver's seat", respectively.

The reflection plane 10 of this case is a windshield of a car. According to the present example embodiment, for example, a "navigation image" can be displayed ahead of the front windshield of a car or the like as the magnified virtual image 12, and a driver as the observer 11 can observe such a navigation image without moving his/her line of vision away from the ahead of the windshield while staying in the driver's seat.

In such an embodiment, it is desired that the magnified virtual image be a "horizontally-oriented image when seen from a driver", as described above. In other words, it is desired that the image formed on a microlens and the magnified virtual image be an image whose angles of view is wider in the X-axis direction.

It is also desired that "the viewing angle be wider in the lateral direction than in the vertical direction" such that a driver as the observer can recognize the displayed image even in a slanting direction from the right and left sides. For this reason, a greater diffusion angle (anisotropic diffusion) is required for the longer-side direction (i.e., X-axis direction) of the magnified virtual image, with reference to the shorter-side direction (i.e., Y-axis direction) of the magnified virtual image.

Accordingly, it is desired that the minute convex lenses of the to-be-scanned surface 8 be anamorphic lenses whose curvature is greater in the longer-side direction than in the shorter-side direction of an image formed on a microlens or a magnified virtual image, and that the diffusion angle of the pixel displaying beam be "wider in the lateral direction than in the vertical direction of a two-dimensional image".

As described above, according to the example embodiment of the present invention, the utilization efficiency of light and the brightness of display image can be improved as the light is dispersed to a minimum area that satisfies the desired angle of view of a HUD.

As a matter of course, "isotropic diffusion" in which the diffusion angle is equal between the lateral direction and the vertical direction may be applied instead of the "anisotropic diffusion" described above. However, as long as a vehicle-installed HUD for a car or the like is concerned, there are few cases in which the driver observes a displayed image from up-and-down directions. Accordingly, as long as a vehicle-installed HUD is concerned, it is desired that the diffusion angle of the pixel displaying beam be "wider in the lateral direction than in the vertical direction of a two-dimensional image" as described above in view of the utilization efficiency of light.

Conventionally, it is known that the surface of a minute convex lens (microlens) can be formed as "aspherical surface".

The anamorphic lens has "aspherical surface", and the use of such an anamorphic lens enables the aspherical surface of a minute convex lens as desired. Moreover, the use of the anamorphic lens can perform aberration correction.

Due to the aberration correction, "nonuniformity in diffusion intensity" may be reduced.

Each of the micro-convex lenses (micro-lenses) in the micro-convex lens structure (micro-lens array) FIG. 15A to FIG. 15C has a square shape or a regular hexagon shape.

The shape of the micro-convex lens is not necessarily a regular polygon shape as described above, but shapes obtained by stretching the shapes of the micro-lenses illustrated in FIG. 15A to FIG. 15C in one direction may also be available.

In this case, the square shape becomes a "rectangle shape", and the regular hexagon shape becomes an elongated deformed polygon shape.

With respect to the effective pixel pitch of the micro-convex lens structure, in the arrays of FIG. 15A to FIG. 15C, the effective pixel pitches in the X-axis direction are denoted by X1 to X3, and the effective pixel pitches in the Y-axis direction are denoted by Y1 to Y3. When the effective pixel pitch in the X-axis direction defined as described above is denoted by "SX" and the effective pixel pitch in the Y-axis direction defined as described above is denoted by "SY", a ratio SY/SX of the both effective pixel pitches is referred to as an "aspect ratio".

In the case of FIG. 15A, since the aspect ratio is "Y1/X1" and X1 = Y1, the aspect ratio is 1.

In the case of FIG. 15B, since the aspect ratio is "Y2/X2" and Y2 > X1, the aspect ratio is larger than 1.

In the case of FIG. 15C, since the aspect ratio is "Y3/X3" and Y3 < X3, the aspect ratio is smaller than 1.

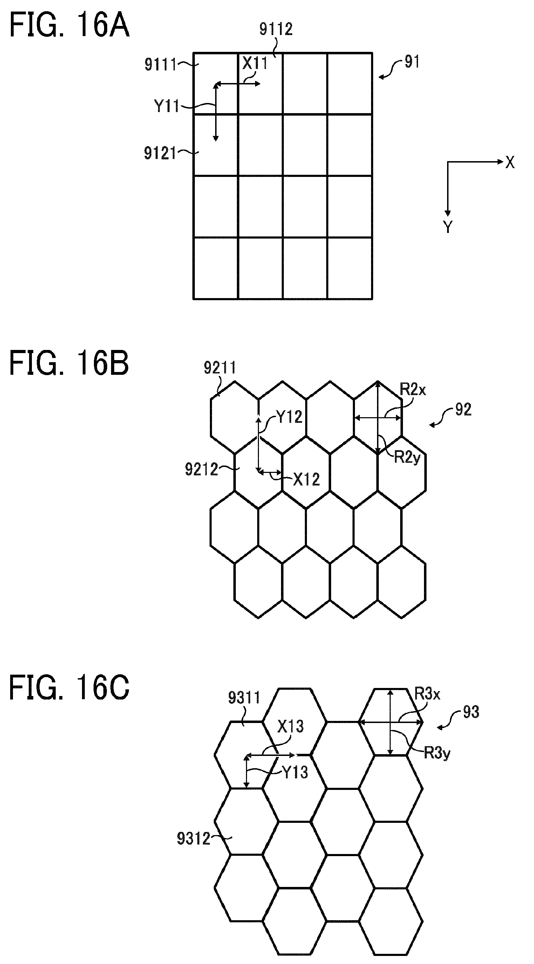

In micro-convex lens structures of micro-lens arrays 91 to 95 illustrated in FIG. 16A to FIG. 16E, similarly to the cases of FIG. 15A to FIG. 15C, the effective pixel pitches are defined as follows.

In other words, the effective pixel pitches in the X-axis direction and Y-axis direction are "X11 and Y11", "X12 and Y12", and "X13 and Y13" of FIG. 16A to FIG. 16E.

In the micro-convex lens structure of FIG. 16A, rectangle-shaped micro-convex lenses 9111, 9112, ..., 9121, and so on are arranged in a square matrix shape, and the aspect ratio is larger than 1.

In the micro-lens arrays 92 to 95 illustrated in FIG. 16B to FIG. 16E, the micro-convex lens structures are honeycomb-type arrays.

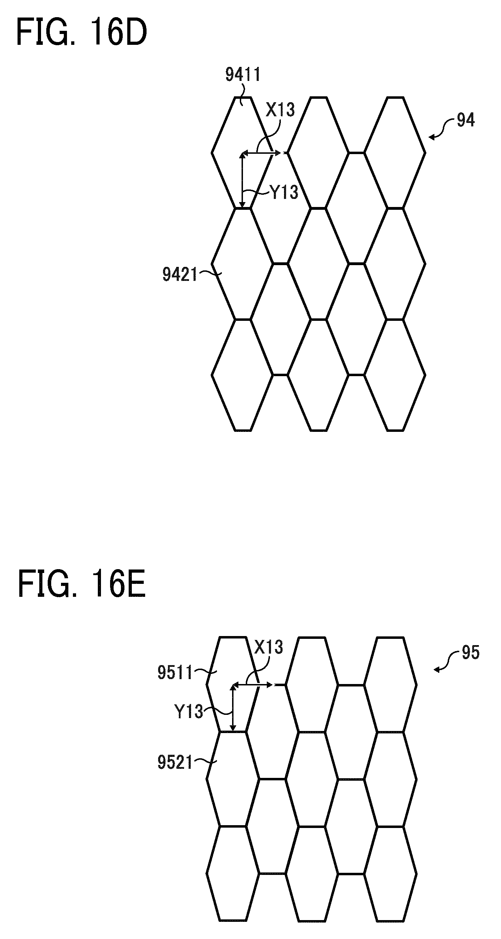

In the honeycomb-type arrays FIG. 16B, FIG. 16D, and FIG. 16E, all the aspect ratios "Y12/X12" and "Y13/X13" are greater than 1.

In the "micro-convex lens" of any one of the five examples of the micro-convex lens structures illustrated in FIG. 16A to FIG. 16E, the length in the Y-axis direction is larger than the length in the X-axis direction.

In this manner, in the case of "the micro-convex lens having a shape where the length in the Y-axis direction is larger than the length in the X-axis direction", as the shape of the micro-convex lens, the curvature in the X-axis direction is easily set to be larger than the Y-directional curvature.

Accordingly, the above-described "anamorphic optical function where the power in the X-axis direction is greater than the power in the Y-axis direction" can be easily implemented.

For example, in the case of the example illustrated in FIG. 16A, as a specific example, there is an example where X11 = 150 μm, Y11 = 200 μm, and aspect ratio = 200/150 = 4/3 > 1.

As a matter of course, in this case, the beam diameter of the pixel displaying beam in the X-axis direction is set to be less than 150 μm, and beam diameter in the Y-axis direction is set to be less than 200 μm.

Any one of the arrays of micro-convex lenses FIG. 16B to FIG. 16D is a honeycomb-type array, and each micro-convex lens has a "elongated shape in the Y-axis direction".

The array of FIG. 16B is a "zigzag-type", and any one of the arrays of FIG. 16C to FIG. 16E is an "armchair-type".

As a matter of course, any one of the "zigzag-type vertically-elongated honeycomb-type array" of FIG. 16B and the "armchair-type vertically-elongated honeycomb-type array" of FIG. 16C can be available.

However, the array example of FIG. 16C has the following advantages in comparison with the array example of FIG. 16B.

In other words, in comparison with the array of FIG. 16B, in the array of FIG. 16C, a "difference between the sizes in the X-axis direction and the Y-axis direction" of the micro-convex lens is small, and a "difference between the effective pixel sizes" in the lateral and vertical directions is small.

Specific sizes (numeric values) are given below. For example, in FIG. 16B, with respect to the micro-convex lenses 9211, 9212, and the like, the lens diameter in the X-axis direction is set to be R2x = 100 μm, and the lens diameter in the Y-axis direction is set to be R2y = 200 μm.

In such cases, the effective pixel pitch in the X-axis direction (= X12) becomes 50 μm, and the effective pixel pitch (= Y12) in the Y-axis direction becomes 150 μm.

In a similar manner, in FIG. 16C, with respect to the micro-convex lenses 9311, 9312, and the like, the lens diameter in the X-axis direction is set to be R3x = 100 μm, and the lens diameter in the Y-axis direction is set to be R3y = 200 μm.

The lengths of the upper and lower sides of the hexagon shapes of the micro-convex lenses 9311 and the like are set to be 50 μm. In such cases, the effective pixel pitch (= X13) in the X-axis direction becomes 75 μm, and the effective pixel pitch (= Y13) in the Y-axis direction becomes 100 μm.

Accordingly, the "effective pixel pitches in the X-axis direction and the Y-axis direction" of the case of the array (75 μm and 100 μm) of FIG. 16C become "closer values" that those of the case of the array (50 μm and 100 μm) of FIG. 16B.

In FIG. 16C, FIG. 16D, and FIG. 16E, the effective pixel pitch in the X-axis direction is denoted by X13, and the effective pixel pitch in the Y-axis direction is denoted by Y13. This is in accordance with the fact that, in the honeycomb-type arrays (armchair-type honeycomb-type arrays) of FIG. 16C to FIG. 16E, the pixel pitch in the X-axis direction and the pixel pitch in the Y-axis direction are defined to be equal to each other. In FIG. 16D, with respect to micro-convex lenses 9411, 9421, and the like, the upper and lower sides parallel to the X-axis direction are short, and the inclined sides are long. In FIG. 16E, with respect to micro-convex lenses 9511, 9521, and the like, the upper and lower sides parallel to the X-axis direction are short, and the inclined sides are long. As illustrated in these drawings, by deformation of the hexagon shape of the micro-convex lens, the pixel pitch in the X-axis direction X13 and the pixel pitch in the Y-axis direction Y13 can be adjusted.

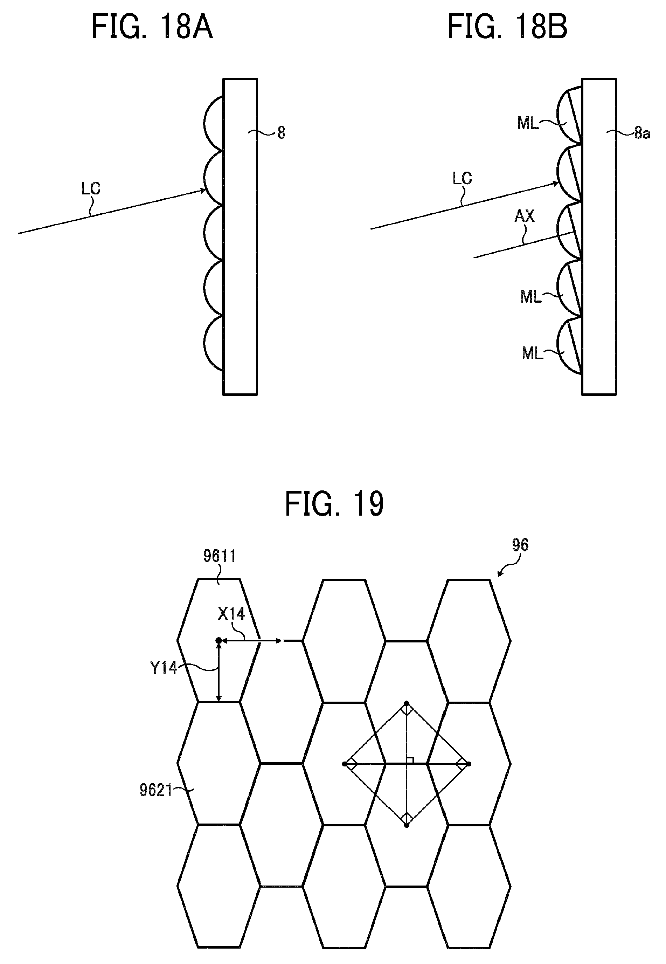

In a similar manner to the case of FIG. 16C, in the arrays of FIG. 16D and FIG. 16E, "the micro-convex lens structures are vertically-elongated structures" and "the effective pixel pitches in the X-axis direction and the Y-axis direction can be equalized". For example, micro-lenses 9611, 9621, and the like of the microlens array 96 illustrated in FIG. 19 have vertically oriented hexagon shapes similarly to the microlens array 95 illustrated in FIG. 16D. The array of the micro-lenses 9611 and the like illustrated in FIG. 19 is an "armchair-type vertically-elongated honeycomb-type array" similarly to the FIG. 16C. The hexagon shape of the micro-lenses 9611 and the like is set so that the effective pixel pitch in the X-axis direction X14 and the effective pixel pitch in the Y-axis direction Y14 are completely equal to each other. As described above, in the armchair-type vertically oriented honeycomb-type array, the aspect ratio can be set to be 1. In the case of the micro-convex of which size is larger than the beam diameter of the pixel displaying beam or the case of the micro-convex lens of which size is substantially equal to the beam diameter of the pixel displaying beam, if the aspect ratio of the effective pixel pitches is 1, with respect to the image data projected as the virtual image, reproducibility by the virtual image is increased. This is because the pixel pitch on the microlens array of the image data projected as the virtual image and the effective pixel pitch can be equal to each other or because, in comparison with other effective pixel pitches, the effective pixel pitch can be approximate to the pixel pitch of the image data on the micro-lens array of the image data projected as the virtual image. Previously, the vertical direction was described as the "up/down direction" and the lateral direction was described as the "left/right direction". However, it was merely for the sake of explanatory convenience. In an actual space, which direction the vertical direction is determined according to the installation direction of the microlens array in the image display apparatus and the installation direction of the image display apparatus in the mobile object such as a vehicle. While performing one reciprocating oscillating (first-axis oscillating) with respect to the one axis, the two-dimensional deflector 6 performs reciprocating oscillating (second-axis oscillating) several times with respect to the other axis. However, in many cases, the X-axis direction that is the longer-side direction of the magnified virtual image is set to the scan direction of the pixel displaying beam LC for the micro-lens array by the second-axis oscillating. Accordingly, the upper and lower sides parallel to the X-axis direction of the "armchair-type" hexagon-shaped micro-lens become substantially parallel to the scan direction of the pixel displaying beam LC for the micro-lens array, and the shape obtained by stretching the interval between the two sides most likely parallel to the scan direction of the "armchair-type" hexagon-shaped pixel displaying beam for the micro-lens array, in other words, the interval between the side most likely parallel to the scan direction of the pixel displaying beam for the micro-lens array and the opposite side so that the interval is enlarged in the direction perpendicular to the two sides is the "armchair-type vertically-elongated honeycomb-type structure".

Therefore, in the armchair-type vertically-elongated honeycomb-type array, in addition to improving the brightness and increasing the number of effective pixels, a difference between the effective pixel pitches in the X-axis direction (horizontal direction) and the Y-axis direction (vertical direction) can be reduced. As illustrated in FIG. 16C to FIG. 16E, the "shape of the micro-convex lens" can be selected as desired, for example, for controlling the divergent angle of the dispersed laser-beam bundle.

In the heads-up display illustrated in FIG. 12A, the pixel displaying beam LC is perpendicularly incident on the micro-convex lens structure of the to-be-scanned surface 8.

However, the form of the incidence of the pixel displaying beam on the to-be-scanned surface is not limited to the "perpendicular incidence".

For example, in the case of miniaturizing the heads-up display by studying arrangement of optical elements ranging from the light source unit to the reflection plane, an incidence form as illustrated in FIG. 18A is considered.

In other words, in an example of FIG. 18A, the pixel displaying beam LC is incident to be inclined with respect to the to-be-scanned surface 8.

In a case where the lens surface of the micro-convex lens is set to be an "aspherical surface", the pixel displaying beam LC is incident to be inclined with respect to the optical axis of the aspherical surface, and thus, in some cases, the function of the aspherical surface cannot be implemented.

In this case, similarly to a to-be-scanned surface 8a of FIG. 18B, it is preferable that a lens surface optical axis AX of the micro-convex lens ML is set to be inclined from the perpendicular direction with respect to a reference surface of the to-be-scanned surface 8a.

By so doing, the lens surface optical axis AX can be allowed to be parallel to the incident direction of the pixel displaying beam LC or to be close to the incident direction.

Note that the reference surface of the to-be-scanned surface 8a is a surface of an array where the micro-convex lenses ML are arranged.

By doing so, the downsizing of the optical system or the improvement of the utilization efficiency of light can be implemented, so that the "divergence direction of the pixel displaying beam by the micro-convex lens" can be allowed to be homogenized.

The application of the HUD according to the example embodiment of the present invention is not limited to a car as described above, but the HUD may be applied to various kinds of operable mobile objects such as trains, ships, helicopters, and aircrafts. For example, a windshield (windbreak) of a motorbike can be configured as a transmitting/reflecting member.

In this case, a windshield ahead of the cockpit may be configured as a reflection plane.

As a matter of course, the HUD according to the present example embodiment may be implemented, for example, as a "image display apparatus for movie viewing".

The minute convex lenses in the minute convex lens arrangement diffuse the pixel displaying beam as described above, but may diffuse the pixel displaying beam only in one direction between the X direction and the Y direction.

In such cases where diffusion is performed only in a single direction, "minute convex cylinder surface" may be applied to the lens surface of the minute convex lenses.

The shape of the minute convex lens may be shaped as a hexagon, and the minute convex lenses may be arranged like a honeycomb. Such variations are conventionally known in the art of microlens array manufacturing method.

The HUD as described above may be provided, for example, for a vehicle such as a car, and the X direction and the Y direction indicate "the right and left directions with reference to a driver's seat" and "the up-and-down directions with reference to the driver's seat", respectively.

The reflection plane 10 of this case is a windshield of a car. According to the present example embodiment, for example, a "navigation image" can be displayed ahead of the front windshield of a car or the like as the magnified virtual image 12, and a driver as the observer 11 can observe such a navigation image without moving his/her line of vision away from the ahead of the windshield while staying in the driver's seat.

In such an embodiment, it is desired that the magnified virtual image be a "horizontally-oriented image when seen from a driver", as described above. In other words, it is desired that the image formed on a microlens and the magnified virtual image be an image whose angles of view is wider in the X direction, i.e., a horizontally oriented image.

Conventionally, it is known that the surface of a minute convex lens (microlens) can be formed as "aspherical surface".

The surface of a micro-convex lens may be formed to have a commonly-used aspherical surface, and the micro-convex lens can perform aberration correction.

Due to the aberration correction, "nonuniformity in diffusion intensity" may be reduced.

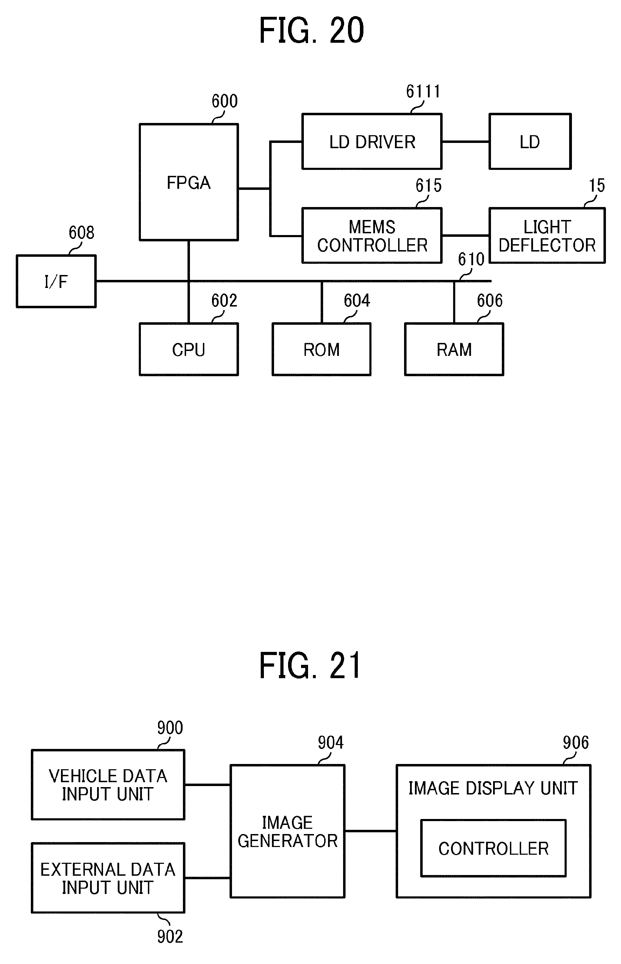

FIG. 20 is a schematic block diagram illustrating a hardware configuration of the image display apparatus 1000. As illustrated in FIG. 20, the image display apparatus 1000 includes a field-programmable gate array (FPGA) 600, a central processing unit (CPU) 602, a read only memory (ROM) 604, a random access memory (RAM) 606, an interface (I/F) 608, a bus line 610, an LD driver 6111, a MEMS controller 615, and the like. The FPGA 600 allows the LD driver 6111 or the MEMS controller 615 to operate an LD (semiconductor laser) of the light source unit 100 and a later-described light deflector 15. The CPU 602 controls operation of the image display apparatus 1000. The ROM 604 stores an image processing program that is executed by the CPU 602 to control operation of the image display apparatus 1000. The RAM 606 is mainly used as a working area in which the CPU 602 executes the program. The I/F 608 is used to communicate with an external controller such as a controller area network (CAN) of a vehicle.

FIG. 21 is a functional block diagram of the image display apparatus 1000 according to the present embodiment. As illustrated in FIG. 21, the image display apparatus 1000 includes a vehicle data input unit 900, an external data input unit 902, an image generator 904, and an image display unit 906. The vehicle data input unit 800 receives vehicle-related data such as the speed and mileage of the vehicle from the CAN or the like. The external data input unit 902 receives external data such as navigation information from the global positioning system (GPS), from the external network. The image generation unit 904 includes the CPU 602, the ROM 604, and the RAM 606, and generates an image which is to be displayed based on information input from a vehicle information input unit 900 and the external information input unit 902. The image display unit 906 includes the FPGA 600, the LD driver 6111, the MEMS controller 615, the LD, and the light deflector 15 and irradiates the reflection plane 10 with the image light according to the image generated by the image generation unit 904. As a result, a magnified virtual image 12 becomes visually recognizable from the viewpoint of an observer 11.

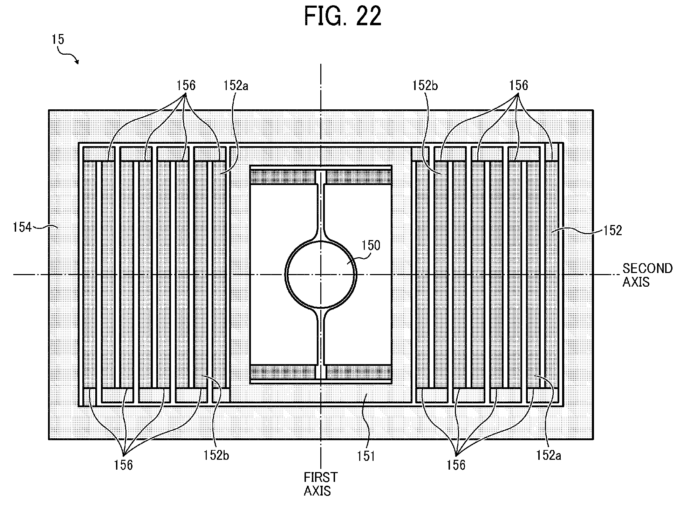

FIG. 22 is a plan view illustrating a light deflector 15 as an example of the two-dimensional deflector 6. As illustrated in FIG. 13, the light deflector 15 is a MEMS mirror manufactured by semiconductor processes. Moreover, the light deflector 15 has a reflection plane, and includes a mirror 150 that is supported by a first frame 151 in a rotatable manner around a first axis, and supporting structure that supports the first frame 151 in a rotatable manner around a second axis that is orthogonal to the first axis. The supporting structure includes a pair of serpentine units 152 that are coupled to each other in such a manner that a plurality of beams meander, and a second frame 154 that supports the serpentine units. The serpentine units 152 are connected to the first frame 151 at one end, and are connected to the second frame 154 at the other end. Each of the beams of the serpentine units 152 is provided with a plurality of piezoelectric materials 156 (for example, PZT (lead zirconate titanate)). By applying different voltage to two of the piezoelectric materials 156 that are provided for the two neighboring beams 152a and 152b of the serpentine units 152, respectively, these two neighboring beams 152a and 152b warp in different directions. According to the accumulated warpage, the mirror 150 oscillates around the second axis with a wide angle. Due to such configuration as above, the optical scanning around the second axis (for example, the optical scanning in the sub-scanning direction) can be performed with low voltage. On the other hand, the optical scanning with resonance around the first axis (for example, the optical scanning in the main-scanning direction) is performed using, for example, a torsion bar that is connected to the mirror 150 and a piezoelectric actuator including a cantilever and a piezoelectric material (e.g., a PZT) that are connected between the torsion bar and the first frame 151. The light deflector 15 includes a detector which detects oscillating positions around the first and second axes of the mirror 150, so that detection information of the detector is output to a processing device 50. The processing device 50 drives and controls the semiconductor laser based on the detection information and the image information.

In recent years, market expectations are increasing for applications where warning and information can be visually noticed by the driver performing slight movement of the line of sight, and the technology development for a vehicle-mounted HUD (head-up display) has been progressing. In particular, with the progress of an on-vehicle sensing technique represented by an advanced driving assistance system (ADAS), a car can acquire various types of travel environment information and information on in-car persons, and as a "outlet of the ADAS" delivering the information to the driver, the HUD has drawn much attention.

As a projection type of the HUD, there are a "panel type" where an intermediate image is displayed by an imaging device such as a liquid crystal or a DMD and a "laser scan type" where an intermediate image is formed by scanning a laser beam emitted from a laser diode by a two-dimensional scanning device. In particular, in the latter laser scan type, unlike the panel type where the image is formed by partial light blocking over the entire screen emission, since emitting/non-emitting can be assigned to each pixel, in general, a high-contrast image can be formed.

The demands for HUDs in the market are summarized in the following two points.

- Downsizing
- Stress-free visual recognition

In regard to the "downsizing", a size is desired that does not interfere the ducts, meters, and defroster stored in the dashboard, and the body structure. This is because changes in the position of ducts, meters, and defroster or the changes in body structure due to the installation of a HUD lead to reduction in air-conditioner performance, defroster performance, and the body strength of the car.

In regard to the "stress-free visual recognition", stress-free graphic is desired for the environment of a driver because a HUD displays graphics around his/her sight at all times. The development of the ADAS technique leads to an increase in an amount of contents to be projected on the HUD. Since there is a limitation in a human recognition process, the increasing sensing information itself is displayed on the HUD, the driver feels troublesome, and in turn, the HUD as an information monitor becomes a cause of impeding view field for driving.

In the HUD described heretofore, that is, the head-up display, the image light formed by the image forming means including the light source and the image forming elements is projected on the screen (for example, a to-be-scanned surface), and after that, the image light is projected, by the projection optical system including the concave mirror. Next, the image light passes through the transmitting/reflecting member (for example, a windshield or a combiner) to be incident on the human eye (can be visually recognized through the transmitting/reflecting member). The screen is configured with, for example, the micro-lens array, and the divergent angle of the light is controlled as desired according to the lens curvature. At this time, the pixel pitches of the display image (virtual image) in the X direction and the Y direction are determined by the magnification ratios of the observation optical system including the projection optical system and the windshield and the effective lens pitches of the micro-lens array in the X direction and the Y direction.

Therefore, in order to downsize the device while suppressing degradation in image quality, a heads-up display (HUD) that serves as an image display apparatus, as will be described later, was developed. The general arrangement of the HUD is the same as that of the image display apparatus 1000 (heads-up display). In the HUD, all the above-described configurations of the image display apparatus 1000 can be employed.

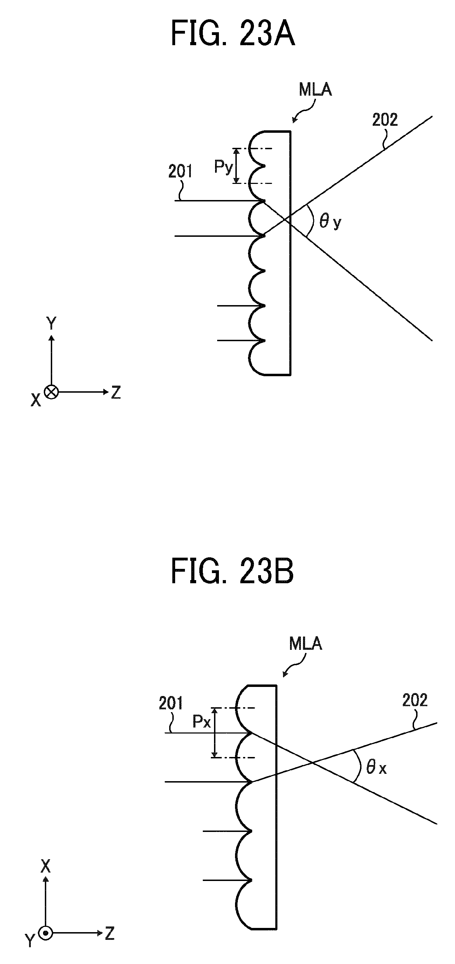

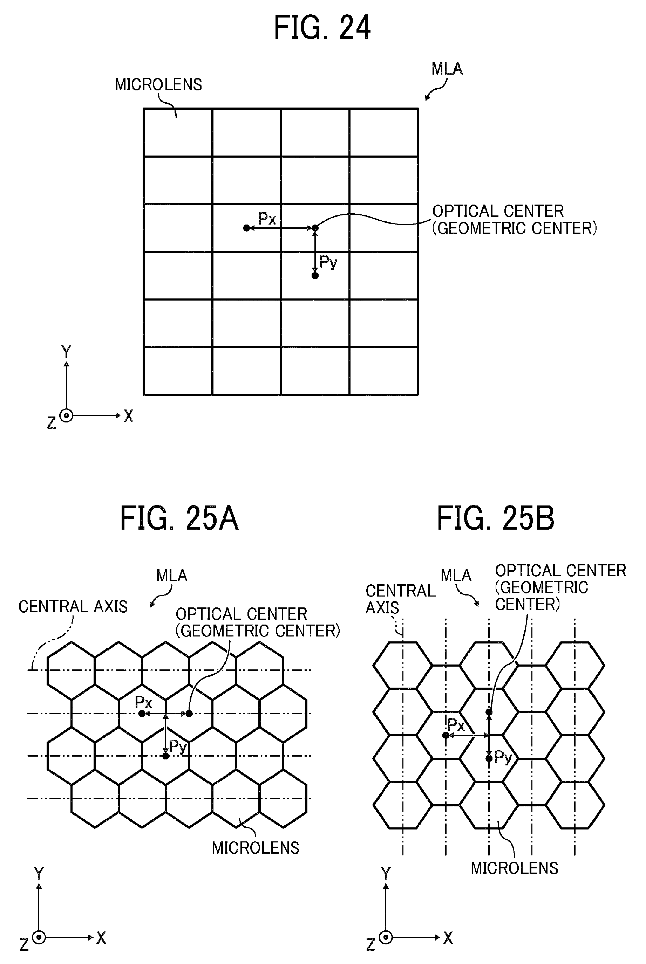

The HUD includes a micro-lens array (hereinafter, sometimes referred to as an "MLA") disposed to be parallel to the XY plane as illustrated in FIG. 23A, FIG. 23B, and FIG. 24.

The MLA has a structure where a plurality of micro-lenses are arranged in a matrix shape (two-dimensional lattice shape) without gap and allows a laser beam from the light source unit 100 to diverge at a desired divergent angle. The micro-lens is a lens of which horizontal width is, for example, about 200 $\mu$m. Moreover, the plane shape (shape viewed from the Z-axis direction) of the micro-lens is not limited to a rectangular shape, but a hexagon shape or a triangle shape may also be employed.

In FIG. 23A and FIG. 24, "Py" denotes the lens pitch in the Y direction. In FIG. 23B and FIG. 24, "Px" denotes the lens pitch in the X direction. In the MLA, the geometric centers match the optical centers in each of the microlenses. The "geometrical center of the micro-lens" denotes the geometrical center of the micro-lens when the micro-lens is viewed from the Z-axis direction. The "optical center of the micro-lens" denotes the "position of the optical axis of the micro-lens" or the "position where the intensity distribution of the transmitting light of the micro-lens is at maximum".

As illustrated in FIG. 23A and FIG. 23B, when the MLA is scanned with an incident laser-beam bundle 201, the incident laser-beam bundle 201 is allowed to diverge by the microlens to be a diverging beam 202. By independently controlling the lens pitches Px and Py of the MLA in the X direction and the Y direction, the incident laser-beam bundle 201 can be allowed to diverge at desired divergent angles $\theta x$ and $\theta y$.

In the present embodiment, the number of pixels of the intermediate image of the HUD is determined by the number of lenses of the MLA. In FIG. 24, a size of a rectangle having distances Py and Px in the Y direction and the X direction between the centers of adjacent two microlenses as vertical and horizontal lengths can be regarded as a size of one pixel in a microlens.

The MLA is not limited to the above-described matrix-type array, but for example, a honeycomb-type array using a plurality of hexagonal microlenses which are substantially the same may also be employed. The honeycomb-type array is broadly classified into two types.

In other words, the honeycomb-type array includes a "zigzag-type array" having sides parallel to the Y direction as illustrated in FIG. 25A and an "armchair-type array" having sides parallel to the X direction as illustrated in FIG. 25B. Also in this configuration, a geometric center and an optical center of each microlens correspond to each other.

In FIG. 25A, the distance between the centers of the two microlenses adjacent to each other in the X direction can be regarded as an X-directional lens pitch Px, and the adjacent interval between the adjacent axes (center axes) passing through centers of the plurality of microlenses arranged in the X direction can be regarded as a Y-directional lens pitch Py. In this case, the X-directional resolution improves.

In FIG. 25B, the distance between the centers of the two micro-lenses adjacent to each other in the Y direction can be regarded as a Y-directional lens pitch Py, and the adjacent interval between the adjacent axes (center axes) passing through centers of the plurality of micro-lenses arranged in the Y direction can be regarded as an X-directional lens pitch Px. In this case, the Y-directional resolution improves.

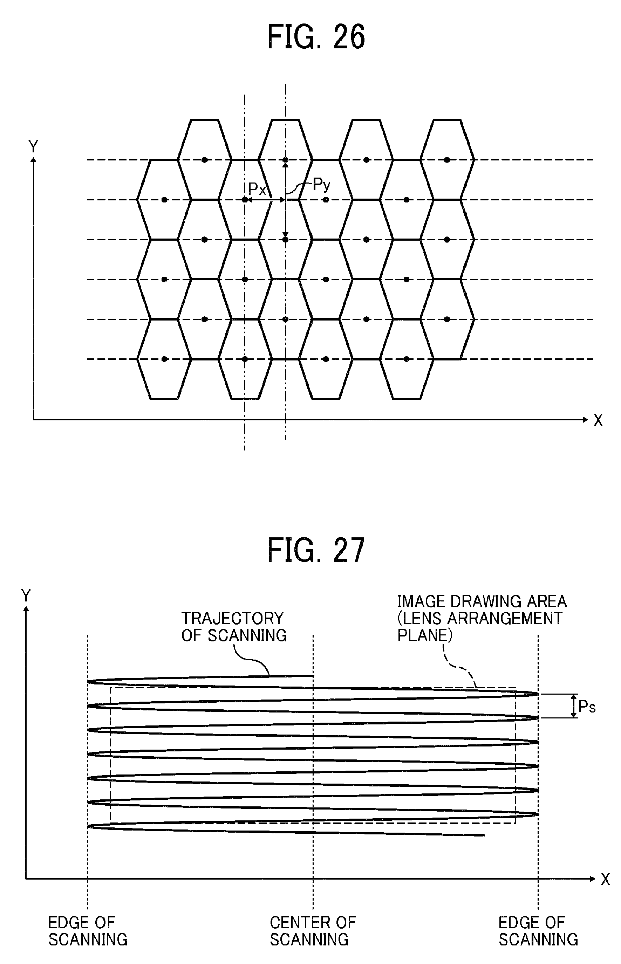

FIG. 26 illustrates a lens arrangement of a microlens array of a control sample. In FIG. 26, the lens arrangement structure is an armchair-type array, and an X-directional lens pitch Px and a Y-directional lens pitch Py are both constant. The reason why such a structure is used is to provide the microlens array with a property of diffusing laser beam and, at the same time, to reduce a speckle pattern, which is interference related noise, due to laser beam, as disclosed also in JP-2014-139657-A.

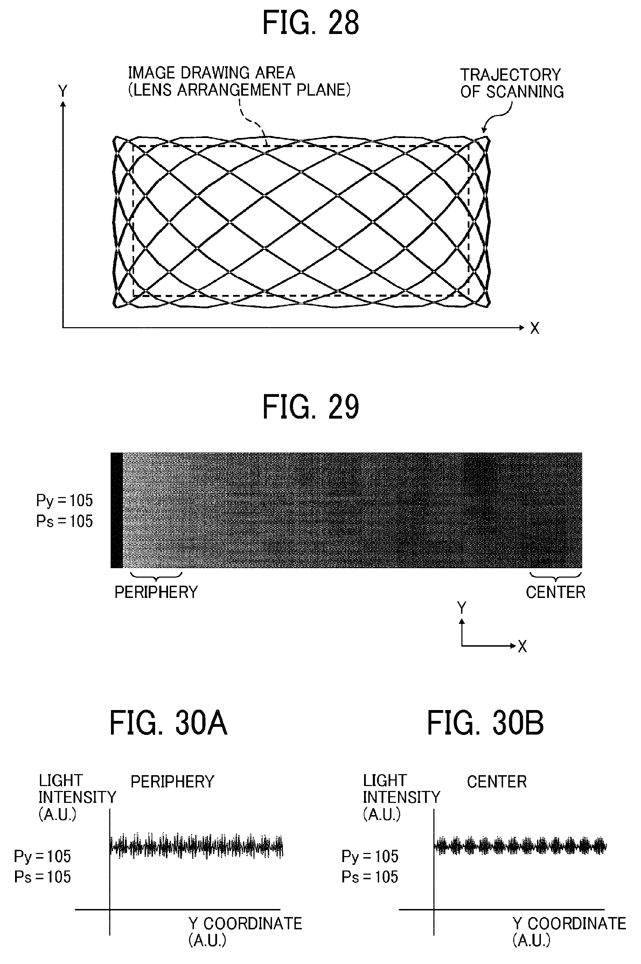

On the other hand, as a scanning line trajectory for a laser scanning method, trajectories are known in which a sinusoidal scan and an equal-speed scan are combined as illustrated in, for example, FIG. 27 (raster scan, in a similar manner to that of JP-4620901-B) and in which a sinusoidal scan is used for the two directions as illustrated in FIG. 28 (Lissajous figure, in a similar manner to that of JP-5091112-B).

When such a scanning line trajectory and the lens arrangement structure of the microlens array (a to-be-scanned surface) are superposed, a light intensity distribution is formed, and the formed light intensity distribution makes an image (virtual image) to be observed.

However, in this case, the moire is developed due to interference between a period of the scanning lines (scanning line intervals) and a cycle of the lens arrangement structure (lens pitch), and the moire will be a cause of deterioration of the image quality. When there is a difference between two types of periodic structures and when the difference is very small, the generation of a moire is noticeable, and when the difference is set large, the moire is visually reduced.

FIG. 29 illustrates the left half of a light intensity distribution (image) formed by light passing through the microlens array in the case that the light draws a scanning line trajectory of the raster scan as illustrated in FIG. 27 and that the scanning line interval Ps (see FIG. 27) at the scanning end and the Y-directional lens pitch Py (sub-scanning direction) are approximately the same (here, Py = Ps = 105). Note that the following discussion can apply to the right half of the image.

FIG. 30 illustrates a light intensity distribution (image), in the Y-direction, of the central part and the peripheral part in the X-direction of FIG. 29. FIG. 30 illustrates that the light intensity distribution can be observed as a distribution with a visible cycle, in other words, a moire when Ps and Py are approximately the same. The moire can be seen on the central part and the peripheral part of the image.

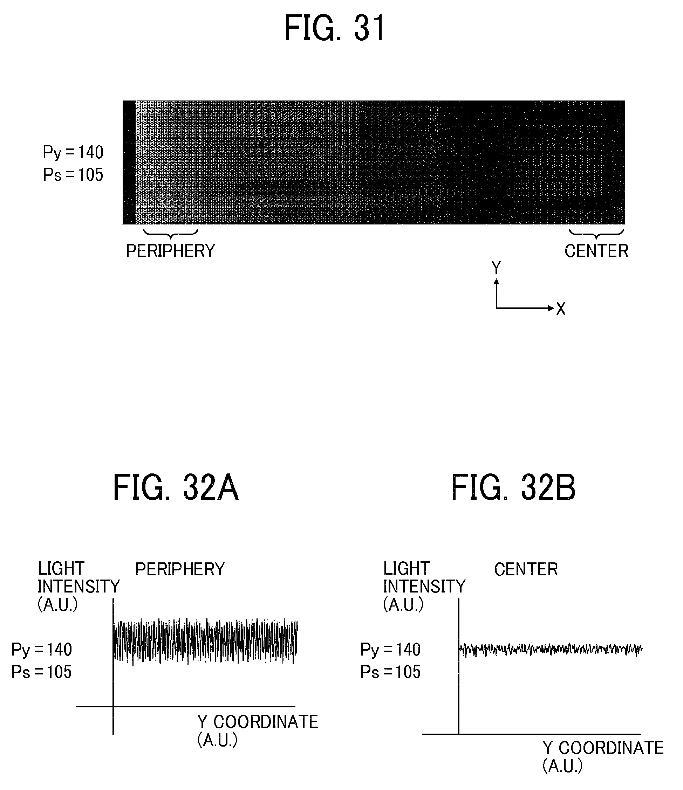

FIG. 31 illustrates the left half of a light intensity distribution (image) formed by light passing through the microlens array in the case that the light draws a scanning line trajectory of the raster scan as illustrated in FIG. 27 and that the relationship between the scanning line interval Ps (see FIG. 27) at the scanning end and the Y-directional lens pitch Py (sub-scanning direction) is Py > Ps (here, Py = 140 and Ps = 105). Note that the following discussion can apply to the right half of the image.

FIG. 32A and FIG. 32B each illustrates a light intensity distribution (image), in the Y-direction, of the central part and the peripheral part in the X-direction of FIG. 31. FIG. 32A and FIG. 32B do not illustrate a cyclic change (moire) as illustrated in FIG. 30; however, FIG. 32A and FIG. 32B illustrate deterioration of granularity caused by the situation that the lens pitch Py (the lens length in the Y-direction) is too large with respect to the scanning line interval Ps.

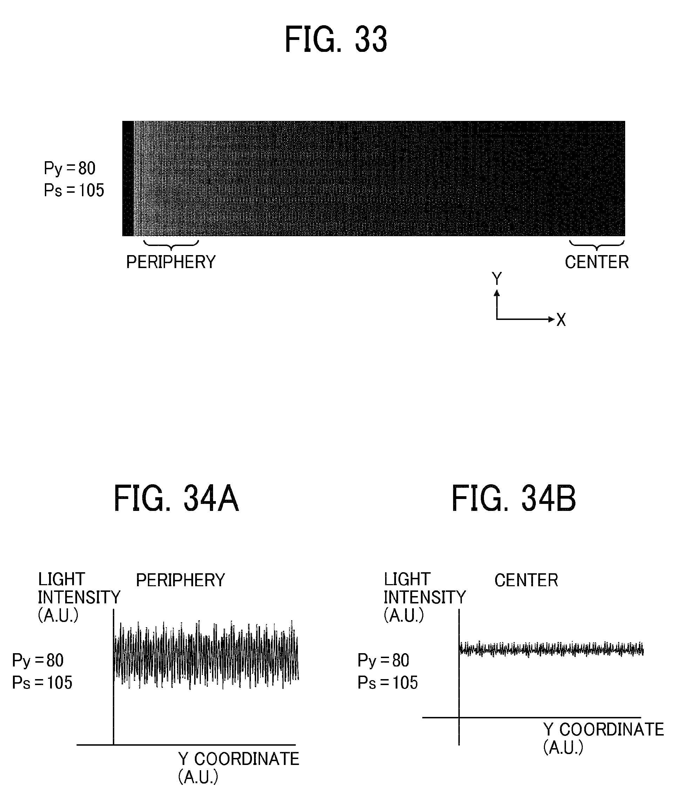

FIG. 33 illustrates the left half of a light intensity distribution (image) formed by light passing through the microlens array in the case that the light draws a scanning line trajectory of the raster scan as illustrated in FIG. 27 and that the relation between the scanning line interval Ps (see FIG. 27) at the scanning end and the Y-directional lens pitch Py (sub-scanning direction) is Py < Ps (here, Py = 80 and Ps = 105). Note that the following discussion can apply to the right half of the image.

FIG. 34 illustrates a light intensity distribution (image), in the Y-direction, of the central part and the peripheral part in the X-direction of FIG. 33. FIG. 34 does not illustrate a cyclic change (moire) as illustrated in FIG. 30. However, FIG. 34 illustrates increase in a speckle noise caused by the situation that the lens pitch Py (the lens length in the Y-direction) is too small with respect to the scanning line interval Ps.

One possible countermeasure to address the troubles due to the relation between Py and Ps as descried above is to make the intervals between the scanning lines very close (small).

However, this countermeasure requires an operating frequency of the two-dimensional deflector to be largely increased; therefore, this countermeasure is very troublesome in the case that a MEMS scanner is used as the two-dimensional deflector, for example. In general, when the operating frequency is increased, an amplitude of motion must be made smaller from the point of view of strength. Further, because the area of the mirror for reflecting light needs to be smaller, it is impossible to achieve a configuration necessary for improvement of image quality by making the beam spot diameter on the microlens array small. The reason will be described below.

Generally, in the case that the aberration of the optical system is small, a beam waist diameter w0 of the converged light beam can be made smaller as a light beam with a wavelength λ directed to the convergence point has a smaller convergence angle θ. Because the equation $\theta = \lambda/(\pi w0)$, w0 is smaller for larger θ.

In order to increase θ, one measure is to make the distance between the MEMS scanner and the image plane smaller, and another measure is to increase the diameter of the incident light beam to the MEMS scanner.

In the case that the distance between the MEMS scanner and the image plane is set smaller, it is necessary to swing the mirror to an extent corresponding to a required image size. Accordingly, the limit of the swing angle determines the approximate distance.

On the other hand, in the case that the diameter of the incident light beam to the MEMS scanner is made larger, it is necessary to increase the mirror diameter of the MEMS scanner. Thus, in the case that "the size of the mirror unit for reflecting the light is required to be smaller", such a requirement is incompatible with the configuration in which the beam waist diameter is made smaller. Accordingly, the "beam spot diameter on the microlens array" cannot be "made smaller". If the beam spot diameter is not made smaller, the speckle noise increases. As a result, it becomes impossible to achieve the configuration necessary to improve the image quality.

Alternatively, if the intervals between the scanning lines are made sparser (larger), the scanning line cannot fill the surface of the microlens array. Accordingly, the image quality apparently deteriorates.

On the other hand, if the lens arrangement structure of the microlens array is closely arranged, the size of the unit structure, for example, the microlens diameter decreases. In this configuration, because there is a limitation in making the beam spot diameter smaller, the beam spot size tends to be larger than the unit structure, and an unacceptable speckle noise is developed. In addition, when the arrangement is made sparse, the pixel size is accordingly large, whereby the deterioration of image quality, which is the deterioration of granularity, is caused.

To address the above issues, a second embodiment is suggested as below where the development of a moire and a speckle noise and the deterioration of granularity are controlled to display a two-dimensional image as desired.

**«Second Embodiment»**

An image display of a second embodiment has a configuration similar to that of the image display 1000 of the first embodiment as described above except for a microlens array.

More specifically, the image display of the second embodiment also includes an optical scanner having a light source unit 100, a two-dimensional deflector 6, a concave mirror 7, and a microlens array that serves as a to-be-scanned surface, and a concave mirror 9.

Also in the microlens array of the second embodiment, in a similar manner to the above first embodiment, it is possible to use: a matrix arrangement using square or rectangular microlenses; and a honeycomb-type array (a zigzag-type array or an armchair-type array) using hexagonal microlenses.

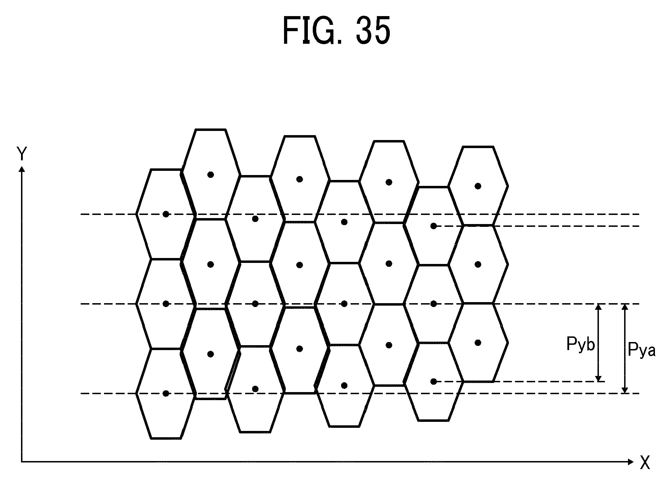

Here, the armchair-type array as illustrated in FIG. 35 is used. Also in this configuration, a geometric center and an optical center of each microlens correspond to each other. In the second embodiment, as understood from FIG. 35, the lens pitch Py, in the Y-direction, of the microlens array varies in the X-direction. In FIG. 35, Pya > Pyb.

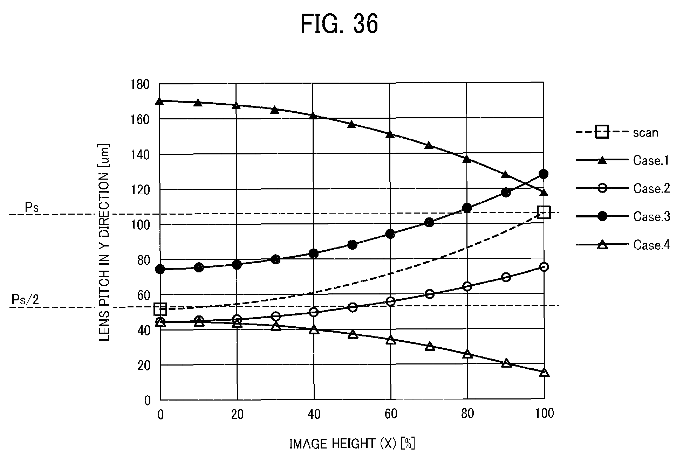

FIG. 36 illustrates a distribution (change), of the scanning line interval Ps, in the X-direction and illustrates a distribution (change), in the X-direction, of the lens pitch Py of the microlens array in the Y-direction, in the second embodiment. The horizontal axis represents the X-direction and corresponds to the direction of a sinusoidal oscillation. The vertical axis represents the lens pitch Py, in the Y-direction, of Cases 1 to 4 given in the explanatory legend. The curved line (hereinafter, referred to as a "scan curve") denoted by "scan" schematically represents the scanning line interval (scanning line cycle) in the screen. The term "screen" refers to a lens arrangement plane (image drawing area) of the microlens array.

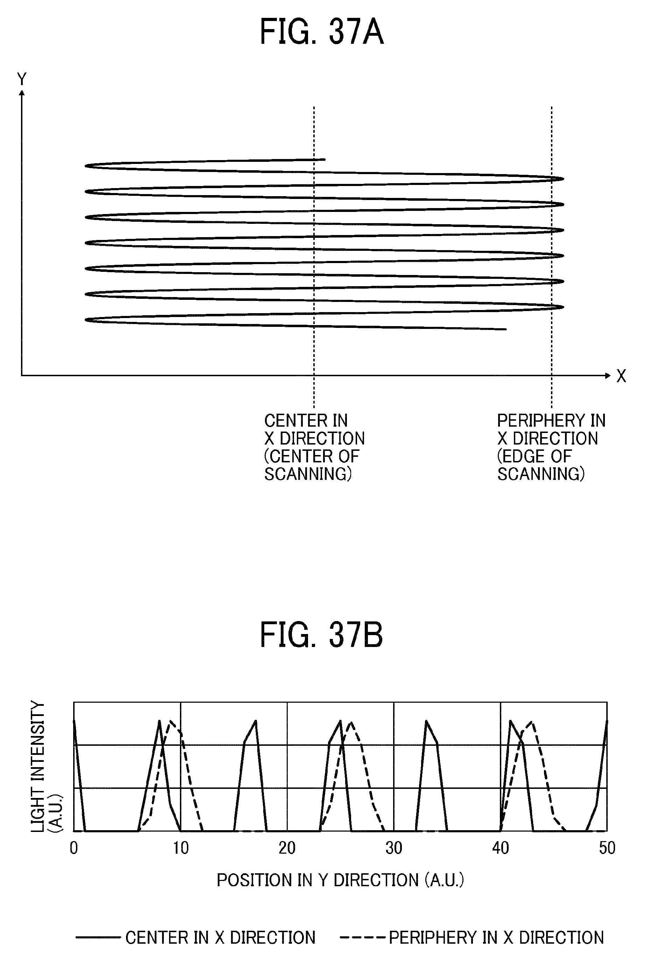

Firstly, the scan curve legend is described. FIG. 37A illustrates a scanning line trajectory obtained by combining a sinusoidal scan in a main scanning direction and an equal-speed scan in a sub-scanning direction. Note that such a combination of scanning may be referred to as a raster scanning. A sectional view of the light intensity distribution is illustrated in FIG. 37B and illustrates that the scanning line interval at the center (scanning center) in the X-direction represented by a solid line is half the scanning line interval Ps represented by broken lines in the periphery (scanning end) in the X-direction. In other words, the scanning line interval gradually increases visually in the X-direction from the center of the screen to the periphery of the screen. The scan curve illustrated in FIG. 36 represents this phenomenon. The scan curve illustrates that (the scanning line interval in the Y-direction) = Ps/2 at the center of the screen (X = 0%) and that (the scanning line interval in the Y-direction) = Ps at the periphery of the screen (X ≈ 100%), and the scan curve monotonically increases from the scanning center to the scanning end.

Next, Case 1 is described. In Case 1, the lens pitch Py becomes gradually smaller (monotonically decreases) from the center of the screen (X = 0%) to the periphery of the screen. In other words, in Case 1, the Y-directional lens pitch Py changes in such a manner that the relationship Ps < Py is consistently satisfied in the area from the center of the screen to the periphery of the screen (X ≈ 100%). In this case, the curved line of Case 1 does not cross the scan curve and is consistently larger than the scan curve. That is, the difference between the scanning line interval Ps and the lens pitch Py is consistently large. With this configuration, a moire is not developed at any part on the screen. Note that, as described above, the moire is large when there is a difference between the scanning line interval Ps and the lens pitch Py and when the difference is very small. When the difference is large, the moire visually decreases.

Note that, in order to reduce the moire with reliability, it is preferable, in Case 1, that Py is changed in such a manner that the relationship Py - Ps > 10 μm is consistently satisfied in the area from the center of the screen to the periphery of the screen.

Further, it is known that if the beam spot diameter is large with respect to the lens diameter, in other words, if the beam spot diameter is large with respect to the lens pitch, a speckle pattern will be developed. Note that there is a correlation between the lens pitch and the lens diameter, and as the lens pitch is made wider, the lens diameter increases.

In view of the above, the beam spot diameter can be made uniformly (equally) small with respect to the lens diameters (lens pitches).

However, it is not easy to design a light-emitting optical system such that the beam spot diameter is uniformly smaller in the screen (the image drawing area). Note that the term "light-emitting optical system" refers to an optical system disposed on an optical path between the microlens array and the light source unit 100 including the two-dimensional deflector 6 and the concave mirror 7.

Accordingly, it is desired that a speckle pattern be reduced even if light-emitting optical system is designed such that the beam spot diameter is partially larger in the screen (for example, the image formation position of the beam is partially more distant), in other words, such that the beam spot diameter is allowed to be distributed.

Accordingly, in Case 1, the Y-directional lens pitch Py is changed to correspond to the beam spot diameter distribution in the screen so as to reduce the creation of a speckle pattern even if the light-emitting optical system is designed so as to allow the beam spot diameter to be distributed in the screen.

Here, the beam spot diameter is distributed, due to the design of the light-emitting optical system, such that the beam spot diameter gradually decreases (monotonically decreases) from the center of the screen (X = 0%) to the periphery of the screen (X ≈ 100%).

In Case 1, as described above, because the Y-directional lens pitch Py (lens lengths in the Y-direction) is made gradually smaller (monotonically decrease) from the center of the screen to the periphery of the screen, it is possible to inhibit that the lens pitch Py becomes small with respect to the beam spot diameter at any image height (X%) in the screen, and the development of a speckle pattern can be controlled.

As a result, in Case 1, the development of a moire and a speckle pattern can be reduced.

The same thing goes also for Case 4 in a similar manner to Case 1. The configuration in Case 4 has a smaller Y-directional lens pitch Py (lens length in the Y-direction) and a smaller beam spot diameter than the configuration in Case 1. Case 4 is technologically more difficult (in particular, more difficult in designing the light-emitting optical system) because of the smaller beam spot diameter. However, as the beam spot diameter is allowed to be distributed in the screen, it is easier to achieve excellent images.

More specifically, also in Case 4, the lens pitch Py becomes gradually smaller (monotonically decrease) from the center of the screen (X = 0%) to the periphery of the screen (X ≈ 100%). Further, in Case 4, the Y-directional lens pitch Py changes while satisfying the relationship Py < Ps/2 between the center of the screen and the periphery of the screen. In this case, the curved line of Case 4 does not cross the scan curve and is consistently smaller than the scan curve. That is, the difference between the scanning line cycle and the lens pitch Py is consistently large. With this configuration, a moire is not developed at any part on the screen.

Note that, in Case 4, in order to reduce a moire with reliability, it is desired that Py be changed in such a manner that the relationship Ps/2 - Py > 10 μm is consistently satisfied in the area from the center of the screen to the periphery of the screen.

Also in Case 4, the Y-directional lens pitch Py is changed to correspond to the beam spot diameter distribution in the screen so as to reduce the development of a speckle pattern even if the light-emitting optical system is designed so as to allow the beam spot diameter to be distributed in the screen.

In a similar manner to the above, the beam spot diameter is distributed, due to the design of the light-emitting optical system, such that the beam spot diameter gradually decreases (monotonically decreases) from the center of the screen (X = 0%) to the periphery of the screen (X ≈ 100%).

Accordingly, also in Case 4, the Y-directional lens pitch Py (lens length in the Y-direction) is changed gradually smaller (monotonically decrease) from the center of the screen to the periphery of the screen.

In this case, it is possible to inhibit that the lens pitch Py becomes small with respect to the beam spot diameter in any desired image height (X%) in the screen, and the development of a speckle pattern can be reduced.

As a result, in Case 4, the moire and the speckle pattern can be reduced, and as the lens pitch Py is small, it is also possible to reduce deterioration of granularity.

Note that, contrary to Cases 1 and 4, the light-emitting optical system may be designed so as to make the beam spot diameter distributed such that the beam spot diameter becomes gradually larger (monotonically increases) from the center of the screen (X = 0%) to the periphery of the screen (X ≈ 100%). In this case, it is desired that the Y-directional lens pitch Py be monotonically increased from the center of the screen to the periphery of the screen under the condition that the relationship Py> Ps or Py <Ps/2 is satisfied. When the lens pitch Py is changed in the opposite way to Cases 1 and 4, it is possible to reduce deterioration of granularity in the image central part, which is the principal part of the image.

In particular, in the case that the change is made in the opposite way to Case 1, as the scanning line cycle monotonically increases from the center of the screen to the periphery of the screen, it is possible to inhibit that the difference between the scanning line cycle and the lens pitch Py becomes excessively increased in any image height in the screen. Moreover, it is possible to reduce development of a moire and a speckle pattern and further to reduce deterioration of granularity. Note that, as described above, if the lens pitch Py (lens length in the Y-direction) is too large with respect to the scanning line cycle, granularity deteriorates.

Next, Cases 2 and 3 will be described. Here, the beam spot diameter is distributed, depending on the design of the light-emitting optical system, such that the beam spot diameter becomes gradually larger from the center of the screen (X = 0%) to the periphery of the screen (X ≈ 100%).

Accordingly, in Cases 2 and 3, in order to make the Y-directional lens pitch Py (lens length in the Y-direction) correspond to the beam spot diameter distribution and the scanning line cycle distribution, the lens pitch Py is changed gradually larger (monotonically increase) from the center of the screen to the periphery of the screen.

In this case, it is possible to inhibit that the lens pitch Py becomes small with respect to the beam spot diameter at any desired image height (X%) in the screen, and the development of a speckle pattern can also be reduced.

Further, it is possible to inhibit that the difference between the scanning line cycle and the lens pitch Py increases at any desired image height (X%) in the screen, and the deterioration of granularity can also be reduced.

Further, it is possible to make the lens diameter smaller at the central part, which is a main part of the image, and the deterioration of granularity can be further reduced. Note that, as the lens diameter is larger, the granular quality further deteriorates, and the uniformity of the image deteriorates.

Further, in Case 2, the relationship Py < Ps/2 is satisfied at the center of the screen (X = 0%), and the relationship Py < Ps is satisfied at the periphery of the screen (X ≈ 100%).

Further, in Case 3, the relationship Ps/2 < Py < Ps is satisfied at the center of the screen (X = 0%), and the relationship Py > Ps is satisfied at the periphery of the screen (X ≈ 100%).

As a result, the curved line of Case 2 and the scan curve do not cross each other, and the curved line of Case 3 and the scan curve do not cross each other. Moreover, a moire is not developed in Case 2 or Case 3.

Note that, in Case 2, in order to reduce a moire and a speckle pattern with reliability, it is desired that the relationship 10 μm < Ps/2 - Py < 25 μm be satisfied at the center of the screen and that the relationship 10 μm < Ps - Py < 25 μm be satisfied at the periphery of the screen.

Further, in Case 3, in order to reduce development of a moire and deterioration of granularity with reliability, it is desired that the relation 10 μm < Py - Ps/2 < 30 μm be satisfied at the center of the screen and that the relationship 10 μm < Py - Ps < 30 μm be satisfied at the periphery of the screen.

As a result, in Cases 2 and 3, it is possible to reduce development of a moire and a speckle pattern and to reduce deterioration of granularity.

As understood from the above description, the configurations of Cases 2 and 3 can be expected to achieve improvement of image quality in the entire image, compared to the configurations of Cases 1 and 4.

Further, the change, in the X-direction, of the lens pitch Py of the Cases 1 and 4 draws a curved line convex toward the direction in which the lens pitch Py increases. However, the change, in the X-direction, of the lens pitch Py may draw a curved line convex toward the direction in which the lens pitch Py decreases or may draw an inclined straight line.

Further, the change, in the X-direction, of the lens pitch Py of the Cases 2 and 3 draws a curved line convex toward the direction in which the lens pitch Py decreases. However, the change, in the X-direction, of the lens pitch Py is not limited to this but may draw, for example, a curved line convex toward the direction in which the lens pitch Py increases or may draw an inclined straight line.

Further, the change, in the X-direction, of the lens pitch Py of Cases 1 to 4 monotonically increases or monotonically decreases. However, the change, in the X-direction, of the lens pitch Py is not limited to this but, for example, may have at least one extreme value between the scanning center and the scanning end.

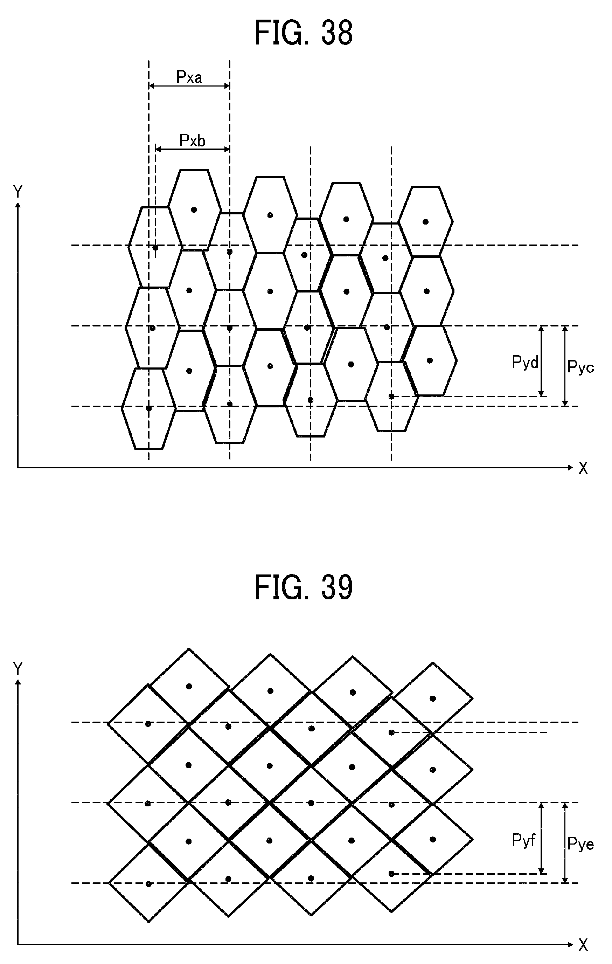

A microlens array illustrated in FIG. 38 is described as a first modification of the second embodiment described above.

In the first modification, not only the Y-directional lens pitch Py but also the X-directional lens pitch P2 are changed in the screen. In FIG. 38, the Pyc > Pyd and Pxa > Pxb.

In the case that the scanning speed in the sub-scanning direction is not constant, for example, in the case that the two-dimensional scanning is performed based on a Lissajous figure of FIG. 28, such a configuration as in FIG. 38 is effective.

The above-described optical scanner of the second embodiment is an optical scanner for displaying an image, and the optical scanner includes the scanning optical system having the light source and the two-dimensional deflector 6 (deflector) that deflects the light from the light source, and the microlens array (optical element having a plurality of projections arranged in an array) that is irradiated with the light from the scanning optical system. In a lens arrangement of the microlens array, the Y-directional lens pitch Py (second direction) perpendicular to the X-direction (first direction) in the XY plane (a lens arrangement plane of the microlens array) is varied in the X-direction.

In this case, if the lens pitch Py is varied, in the X-direction, depending on, for example, an aspect of the scanning line on the microlens array, it is possible to reduce at least one of development of a moire, development of a speckle pattern, and deterioration of granularity.

As a result, deterioration of image quality can be reduced.

Further, the lens pitch Py is varied in the X-direction by varying, in the X-direction, the lens length in the Y-direction so that the lenses can fill the space, and the development of a speckle pattern can also be reduced.

Further, by using the light from the light source, scanning optical system cyclically two-way scans the microlens array in the X-direction, and at the same time, one-way scans the microlens array in the second direction at a constant speed. In other words, the scanning optical system performs raster scanning, and the lens pitch Py according to the change, in the X-direction, of the cycle of the scanning lines formed on the microlens array.

In this case, the difference between the lens pitch Py and the cycle of the scanning lines at any desired position (image height) in the scanning range in the X-direction can be in such a magnitude that the deterioration of image quality can be reduced. More specifically, it is possible to reduce development of a moire, development of a speckle pattern, and deterioration of granularity.

As a result, deterioration of image quality can further be reduced.

Further, as the lens pitch Py and the cycle of the scanning lines cannot be identical at any position, in the X-direction, on the microlens array, the deterioration of image quality can be reduced with even greater reliability.

Further, in the case that the period of the scanning lines monotonically increases from the scanning center to the scanning end in the X-direction and that the lens pitch Py monotonically increases from the scanning center to the scanning end in the X-direction, it is possible to set the difference between the lens pitch Py and the cycle of the scanning lines to such a magnitude at any desired position in the scanning range in the X-direction that deterioration of image quality can be reduced.

Further, in the case that the relationship Ps < Py or Ps/2 > Py is satisfied at any position, in the X-direction, on the microlens array when the cycle of the scanning lines at the scanning end is set to Ps (when the cycle of the scanning lines is set to Ps/2 at the scanning center), it is possible to inhibit that the lens pitch Py gets close to the cycle of the scanning lines at any desired position. Thus, it is possible to reduce development of a moire at any desired position in the scanning range in the X-direction.

Note that Ps can be thought as the movement amount, in the Y-direction, of the light in one cycle of the cyclic two-way scan in the X-direction.

Further, in the case that the relationship Ps/2 < P2 < Ps is satisfied at the scanning center and the relationship P2 > Ps is satisfied at the scanning end when the cycle of the scanning lines at the scanning end is set to Ps (when the cycle of the scanning lines is set to Ps/2 at the scanning center), it is possible to inhibit that the lens pitch Py gets close to the cycle of the scanning lines. Thus, it is possible to reduce development of a moire at any desired position in the scanning range in the X-direction.

Further, in the case that the relationship P2 < Ps/2 is satisfied at the scanning center and the relationship Ps/2 < P2 < Ps is satisfied at the scanning end when the cycle of the scanning lines at the scanning end is set to Ps (when the cycle of the scanning lines is set to Ps/2 at the scanning center), it is possible to inhibit that the lens pitch Py gets close to the cycle of the scanning lines. Thus, it is possible to reduce development of a moire at any desired position in the scanning range in the X-direction.

Further, in the case that the beam spot diameter of the light emitted to the microlens array changes in the X-direction and the lens pitch Py is varied depending on the change, in the X-direction, of the beam spot diameter, development of a speckle pattern can be effectively reduced.

Further, in the case that the lens pitch P1, in the X-direction, of the microlens array is changed in the Y-direction, the lens pitch can be two-dimensionally varied, and development of a moire can be reduced throughout the entire screen even if, for example, the scan is not performed at a constant speed in the Y-direction (sub-scanning direction).

In the case that the microlens array includes a plurality of hexagonal microlenses closely arranged in a honeycomb shape, coherent noise is developed and dispersed in three different directions. Thus, the contrast of the coherent noise (speckle pattern) is accordingly lowered and is hardly viewed as coherent noise. Further, as the shape is simple, the microlens array can be easily manufactured.

Further, in the case that the microlens array includes a plurality of closely arranged rectangular, it is easy to control a dispersion profile. Further, as the shape is simple, the microlens array can be easily manufactured.

Further, as the image display of the second embodiment includes: the optical scanner of the second embodiment; and the concave mirror 9 (optical system) that guides the light through the microlens array of the optical scanner into a transmissive reflector (reflection surface element 10), the image display can display a high-visibility image.

Further, a mobile object device that includes the image display of the second embodiment and a mobile object on which the image display is mounted can provide an operator of the mobile object with a high-visibility image.

When the optical center of the microlens approximately matches the geometric center of the geometric center of the microlens, the design and manufacturing of the microlens array can be simplified.

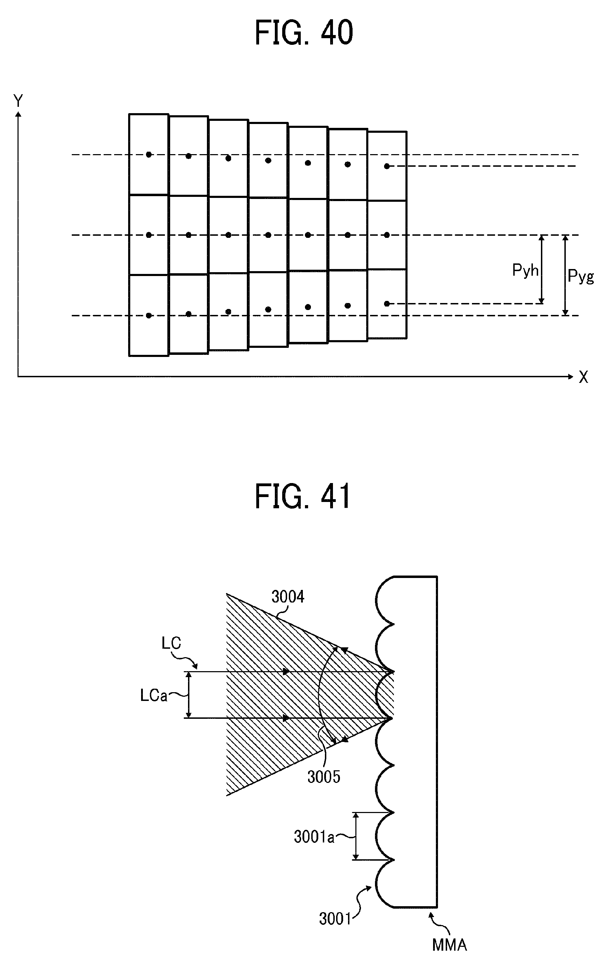

As a second modification and a third modification of the second embodiment, microlens arrays as illustrated in FIG. 39 and FIG. 40 are described.

The shapes of the lenses of the microlens arrays according to the second modification and the third modification are a rhomboid and a rectangle, respectively. Such shapes of lens may deform when the radius of curvature of the cross section is controlled to process the lenses, and the optical dispersion profile can be adjusted to have a shape desirable for an observation optical system at a subsequent stage.

Further, from a similar point of view, the lens shape for the microlens array may be a parallelogram, trapezoid, or the like other than a rhomboid and a rectangle. Whichever shape is selected, it is desired that the lenses be arranged without gaps, with a view to reducing a speckle pattern.

Further, in the above embodiments, instead of the microlens array (an optical element having micro-convex lens arrangement), a micromirror array (a micro convex mirror structure, in other words, an optical element having a plurality of projections arranged in an array) may be employed as the to-be-scanned surface. In other words, the first embodiment and the second embodiment can be practiced with a micromirror array instead of a microlens array.

FIG. 41 illustrates, as an example, a micromirror array (MMA) as the optical element having the micro-convex mirror arrangement. As illustrated in FIG. 41, the MMA has a plurality of micro convex mirrors 3001 arranged in an array.

The micro convex mirror 3001 is larger than the "beam diameter of a pixel displaying beam LC". The micro convex mirror 3001 is made larger than the "beam diameter of the pixel displaying beam LC" to reduce the coherent noise, and the reason is described with reference to FIG. 41.

A laser-beam bundle diameter LCa of the pixel displaying beam LC is smaller than the size 3001a of the micro convex mirror 3001.

In other words, the size 3001a of the micro convex mirror 3001 is larger than the light-beam bundle diameter LCa. Note that, the pixel displaying beam LC according to the present embodiment is a laser-beam bundle and has a light intensity distribution of a Gaussian distribution around the center of the laser-beam bundle.

Accordingly, the light-beam bundle diameter LCa is a distance in the radial direction of a laser-beam bundle, where the light intensity in the light intensity distribution decreases down to "$1/e^2$".

In FIG. 41, the light-beam bundle diameter LCa is illustrated to have a size equal to the size 3001a of the micro convex mirror 3001. However, the light-beam bundle diameter LCa does not need to be equal to the "size 3001a of the micro convex mirror 3001".

The point is that the incident light beam to the micro convex mirror 3001 only has to be within the micro convex mirror 3001.

In FIG. 41, the whole of the pixel displaying beam LC enters one micro convex mirror 3001 and is converted into diffused light beam 3004 having a divergence angle 3005. Note that the "divergence angle" may be referred to as a "diffusion angle" in some cases.

In FIG. 41, the number of the diffused light beam 3004 is one, and there is no interfering light beam. Accordingly, there is no coherent noise (speckle noise) developed.

Note that the size of the divergence angle 3005 may be set by adjusting the shape of the micro convex mirror 3001 as appropriate.

Note that, in the above second embodiment, the Y-directional lens pitch Py is varied depending on both the scanning line cycle in the X-direction and the beam spot diameter distribution (the change, in the X-direction, of the beam spot diameter). However, the Y-directional lens pitch Py may be varied depending only on the change, in the X-direction, of the scanning line cycle.

In this case, the beam spot diameter distribution of the microlens array due to the design of the light-emitting optical system may be corrected. There are some methods of adjusting the beam spot diameter. For example, a tunable laser may be used in one method. Alternatively, a beam-diameter variable optical system may be used (see, for example, the optical system disclosed in JP 1995-089131-A, an optical system in which a plate-like member having a plurality of pinholes with different diameters is moved transversally on the optical path of the beam, and an optical system for varying the image formation position of the beam).

More specifically, based on the information detected by a detector provided for a light deflector 15 to detect the movement around a first axis and a second axis of a mirror 150, the processing device 50 may control a beam-spot diameter adjuster (e.g., a tunable laser or a beam-diameter variable optical system) to vary the beam spot diameter according to the position (image height X) in the main scanning direction. By so doing, the beam spot diameter in the microlens array becomes uniform.

Further, the above beam-spot diameter adjuster may be used to reduce a speckle pattern to be developed due to a design error, a production error, an error in shape over time, or the like of the microlens array according to the second embodiment. More specifically, the beam spot diameter is adjusted so that the beam spot diameter does not become too large with respect to the lens pitch Py at any desired position in the scanning range in the X-direction.

Further, in the above second embodiment, the Y-directional lens pitch Py is varied depending on both the scanning line cycle in the X-direction and the beam spot diameter distribution. However, the Y-directional lens pitch Py may be varied depending only on the change in the beam spot diameter distribution.

Further, in the above second embodiment, the geometric center and the optical center of each microlens of the microlens array are at the same position. However, the geometric center and the optical center may be displaced from each other so some degree if it is possible to reduce at least one of development of a moire, development of a speckle pattern, and deterioration of granularity, by varying the Y-directional lens pitch Py.

Further, in the above second embodiment, the beam spot diameter distribution is set first, and the lens pitch Py in Y-direction is varied in the X-direction, depending on the change, in the X-direction, of the beam spot diameter. However, alternatively, it is possible to fist set the distribution (variation), in the X-direction, of the Y-directional lens pitch Py and to vary, in the X-direction, the beam spot diameter, depending on the set distribution. In this case, a speckle pattern can be effectively reduced. More specifically, the beam spot diameter distribution in the X-direction may be set by the design of the light-emitting optical system, or the beam spot diameter distribution in the X-direction may be set by the above beam-spot diameter adjuster.

Further, in the microlens array of each of the above embodiments, a plurality of microlenses are two-dimensionally arranged. However, alternatively, the microlenses may be three-dimensionally arranged. For example, the microlens array may be curved as a whole.

In the above-described embodiments, the projection optical system is configured with the concave mirror 9. However, the prevent invention is not limited thereto, but for example, the projection optical system may be configured with a convex mirror, or the projection optical system may be configured so as to include a curved mirror (concave mirror or convex mirror) and a folding mirror disposed between the curved-surface mirror and the to-be-scanned surface.

Further, in the above embodiments, the optical scanner includes the concave mirror 7. However, the optical scanner does not have to include the concave mirror 7. In that case, it is desired that the concave mirror 9 be designed and disposed so that the concave mirror 9 corrects the optical deformation in which the horizontal line of the intermediate image is distorted to be convex upward or downward due to the effect of the reflection surface element 10.

Further, in the above embodiments, a semiconductor laser is used as the light source. However, another type of laser may be used.

In the above-described embodiments, the image display apparatus is configured so as to correspond to a color image. However, the image display apparatus may be configured so as to correspond to a monochrome image.

The transmission and reflection member that serves as the reflection plane 10 may be configured with a member, for example, a so-called combiner other than the windshield of the mobile body or may be configured in front of the windshield as viewed from the observer.

The transmission and reflection member is not limited to the windshield of the mobile object, but for example, a side glass, a rear glass, or the like may be employed. In other words, the transmission and reflection member is satisfactory as long as it is provided for the mobile object driven by a driver who visually recognizes the virtual image and the transmission and reflection member is a windshield through which the driver visually recognizes the outside of the mobile object.

A target (observer) for which a virtual image is made visually recognizable by the image display apparatus according to the present example embodiment is not limited to the driver of the mobile object, but may be, for example, a navigator or passenger such as a fellow passenger who are in the mobile object.

In the embodiments described above, cases in which the image display apparatus (HUD) is provided for a mobile object such as a vehicle, an aircraft, and a ship were described. However, no limitation is indicated thereby, and modification may be made as long as the image display apparatus is provided for provided for an object. The term "object" includes not only a mobile object but also an object that is located on a permanent basis or an object that is transportable.

The image display apparatus according to the embodiments of the present invention is applicable not only to a heads-up display but also to, for example, a head-mounted display, a prompter, and a projector.

For example, in the case that the image display is applied to a projector, the projector guides the light having passed the optical scanner of the first or second embodiment and the microlens array of the optical scanner, to a projection surface.

Further, the concrete numerical values, shapes, and the like are just examples and can be appropriately modified without departing from the spirit of the present invention.

In the following, the process in which the inventors of the present invention have conceived the second embodiment will be described.

Conventionally, the optical scanner is widely known related to an image forming apparatus such as a laser printer, a digital copier, an optical plotter. However, in recent years, scanning type projectors have been widely proposed in which a multicolor light beam is applied to a two-dimensionally scanning mirror to obtain a two-dimensional color image.

In particular, a semiconductor laser beam source has a high-directivity light beam, and a high light utilization efficiency can thus be achieved. For this reason, the semiconductor laser beam source is said to be suitable to the above scanning type projector.

The scanning type projector using a semiconductor laser can generate intense light inside the device without such a large radiator that a xenon lamp would need, and the high directivity makes it possible to form a bright image even in a small optical system. For this reason, the scanning type projector using a semiconductor laser is largely expected as a projector unit embedded in various devices.

A heads-up display is a virtual image projector integrated into a passenger vehicle. Also in this device, a semiconductor laser scanning projector can effectively be used.

An inherent issue in the laser display includes development of a speckle noise. As a technique to avoid this issue, application of a microlens array is proposed (see JP-2014-139657-A).

On the other hand, because the microlens array has a cyclic arrangement structure, the microlens array has a disadvantage that a moire can be observed with the cyclic arrangement structure being interfered by the scanning line cycle of the two-dimensional scanning so that the image quality is decreased.

In view of this disadvantage, the inventors have conceived the above second embodiment to reduce development of a speckle pattern and a moire.

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims.

**Claims**

1. A microlens array comprising microlenses (m11 to m17, m21 to m27, m31 to m37, m41 to m47, m51 to m57, ml) regularly arranged in a two-dimensional area, the microlenses (m11 to m17, m21 to m27, m31 to m37, m41 to m47, m51 to m57, ml) being two-dimensionally scanned by scanning lines of a light beam in a main scanning direction and a sub-scanning direction, where adjoining scanning lines of the light beam are not parallel to each other, wherein the microlenses (m11 to m17, m21 to m27, m31 to m37, m41 to m47, m51 to m57, ml) that are main-scanned by an arbitrary one of the main-scanning scanning lines of the light beam are arranged to follow the main-scanning scanning line of the light beam.

2. The microlens array according to claim 1, wherein a line segment connecting centers of adjoining microlenses (m11 to m17, m21 to m27, m31 to m37, m41 to m47, m51 to m57, ml) in the microlenses (m11 to m17, m21 to m27, m31 to m37, m41 to m47, m51 to m57, ml) constituting an arbitrary row that is arranged in a main scanning is parallel to the scanning line of the light beam that main-scans the adjoining microlenses (m11 to m17, m21 to m27, m31 to m37, m41 to m47, m51 to m57, ml).

3. The microlens array according to claim 1, wherein arrangement lines of the microlenses (m11 to m17, m21 to m27, m31 to m37, m41 to m47, m51 to m57, ml) regularly arranged in the two-dimensional area are not parallel to each other at least one direction of the regular arrangement.

4. The microlens array according to claim 1, wherein the microlenses (m11 to m17, m21 to m27, m31 to m37, m41 to m47, m51 to m57, ml) that are main-scanned by the light beam are arranged to follow a curved scanning line of the main scanning.

5. The microlens array according to claim 1 or 2, wherein the microlenses (m11 to m17, m21 to m27, m31 to m37, m41 to m47, m51 to m57, ml) are arranged such that a sub-scanning arrangement line, which is an arrangement of microlenses (m11 to m17, m21 to m27, m31 to m37, m41 to m47, m51 to m57, ml) in a sub-scanning direction, is perpendicular to a group of the scanning lines of the main scanning.

6. The microlens array according to any one of claims 1, 2, and 5, wherein each of the microlenses (m11 to m17, m21 to m27, m31 to m37, m41 to m47, m51 to m57, ml) has a rectangular shape or a hexagonal shape,

a group of four lines or a group of six lines constitute a border between any one of the microlenses (m11 to m17, m21 to m27, m31 to m37, m41 to m47, m51 to m57, ml) and other microlenses (m11 to m17, m21 to m27, m31 to m37, m41 to m47, m51 to m57, ml) that are in contact with the any one of the microlenses (m11 to m17, m21 to m27, m31 to m37, m41 to m47, m51 to m57, ml), and
at least one line of the group of four lines or the group of six lines is parallel to the scanning line of the light beam that main-scans the any one of the microlenses (m11 to m17, m21 to m27, m31 to m37, m41 to m47, m51 to m57, ml).

7. The microlens array according to claim 5 or 6, wherein
each of the microlenses (m11 to m17, m21 to m27, m31 to m37, m41 to m47, m51 to m57, ml) has a hexagonal shape, and the microlenses (m11 to m17, m21 to m27, m31 to m37, m41 to m47, m51 to m57, ml) are arranged in a honeycomb pattern.

8. The microlens array according to claim 5, wherein
each of the microlenses (m11 to m17, m21 to m27, m31 to m37, m41 to m47, m51 to m57, ml) has a hexagonal shape, and the microlenses (m11 to m17, m21 to m27, m31 to m37, m41 to m47, m51 to m57, ml) are arranged in a vertical honeycomb-type array.

9. The microlens array according to claim 5, wherein
each of the microlenses (m11 to m17, m21 to m27, m31 to m37, m41 to m47, m51 to m57, ml) has a hexagonal shape, and the microlenses (m11 to m17, m21 to m27, m31 to m37, m41 to m47, m51 to m57, ml) are arranged in a lateral honeycomb-type array.

10. An image display apparatus (1000) comprising:

a light source (100) configured to emit a light beam to display an image;
a deflector (6, 15) configured to deflect the light beam two-dimensionally;
a microlens array that is two-dimensionally scanned by the light beam that is two-dimensionally deflected by the deflector (6, 15); and
an image forming optical system (9) to form, with light from the microlens array, a virtual image of an image to be displayed,

wherein the microlens array according to any one of claims 1 to 9 is used as the microlens array.

11. The image display apparatus (1000) according to claim 10, wherein
the light beam with which the image forming optical system (9) forms the virtual image is emitted toward a reflector, and
the light beam forms the virtual image at a position beyond the reflector.

12. The image display apparatus (1000) according to claim 11, wherein
the image display apparatus (1000) is configured as a head-up display.

13. An optical scanner comprising:

a scanning optical system including a light source (100) to emit light and a deflector (6, 15) to deflect the light emitted from the light source; and
an optical element including a plurality of projections that are arranged in the microlens array according to claim 1, the optical element being irradiated with the light from the scanning optical system,

wherein, in an arrangement of the protrusions of the optical element, a pitch P2, in a second direction, of the projections is varied in a first direction, and the second direction is perpendicular to the first direction in a surface of the arrangement of the projections.

14. The optical scanner according to claim 13, wherein n the optical element, a length, in the second direction, of each of the projections is varied in the first direction.

15. The optical scanner according to claim 13 or 14, wherein
by using the light from the light source (100), the scanning optical system two-way scans the optical element in the first direction, and simultaneously one-way scans the microlens array in the second direction, and
the pitch P2 is varied depending on change, in the first direction, of an interval between scanning lines formed on the optical element.

# FIG. 1

# FIG. 2A

# FIG. 2B

# FIG. 3

## FIG. 4A

## FIG. 4B

# FIG. 5

# FIG. 6A

MLA1

ML1

b
c
a

# FIG. 6B

ML2    MLA2

b
c
a

# FIG. 6C

ML3    MLA3

e
d
f

# FIG. 6D

MLA4

ML4

e
d
f

# FIG. 7A

# FIG. 7B

# FIG. 8A

# FIG. 8B

# FIG. 9A

# FIG. 9B

# FIG. 10

# FIG. 11A

# FIG. 11B

# FIG. 12A

# FIG. 12B

# FIG. 12C

# FIG. 13A

# FIG. 13B

# FIG. 14A

# FIG. 14B

# FIG. 14C

WAVELENGTH λ

FIG. 15A

FIG. 15B

FIG. 15C

FIG. 16A

FIG. 16B

FIG. 16C

FIG. 16D

FIG. 16E

## FIG. 17A

## FIG. 17B

# FIG. 18A

# FIG. 18B

# FIG. 19

# FIG. 20

600

6111

LD DRIVER — LD

FPGA

608

615

15

MEMS
CONTROLLER

LIGHT
DEFLECTOR

610

I/F

602

604

606

CPU

ROM

RAM

# FIG. 21

900

904

906

VEHICLE DATA
INPUT UNIT

IMAGE
GENERATOR

IMAGE DISPLAY UNIT

CONTROLLER

EXTERNAL DATA
INPUT UNIT

902

# FIG. 22

# FIG. 23A

MLA

202

201

Py

θy

Y

X ⊗ → Z

# FIG. 23B

MLA

201

202

Px

θx

X

Y ⊙ → Z

# FIG. 24

# FIG. 25A          FIG. 25B

# FIG. 26

# FIG. 27

# FIG. 28

Y

IMAGE DRAWING AREA
(LENS ARRANGEMENT PLANE)

TRAJECTORY
OF SCANNING

X

# FIG. 29

Py = 105
Ps = 105

PERIPHERY

CENTER

Y

X

# FIG. 30A

LIGHT
INTENSITY
(A.U.)

PERIPHERY

Py = 105
Ps = 105

Y COORDINATE
(A.U.)

# FIG. 30B

LIGHT
INTENSITY
(A.U.)

CENTER

Py = 105
Ps = 105

Y COORDINATE
(A.U.)

# FIG. 31

Py = 140
Ps = 105

PERIPHERY                                                CENTER

Y

X

# FIG. 32A

# FIG. 32B

LIGHT
INTENSITY
(A.U.)

PERIPHERY

Py = 140
Ps = 105

Y COORDINATE
(A.U.)

LIGHT
INTENSITY
(A.U.)

CENTER

Py = 140
Ps = 105

Y COORDINATE
(A.U.)

# FIG. 33

Py = 80
Ps = 105

PERIPHERY                    CENTER

Y

X

# FIG. 34A

LIGHT INTENSITY (A.U.)    PERIPHERY

Py = 80
Ps = 105

Y COORDINATE (A.U.)

# FIG. 34B

LIGHT INTENSITY (A.U.)    CENTER

Py = 80
Ps = 105

Y COORDINATE (A.U.)

# FIG. 35

FIG. 36

# FIG. 37A

CENTER IN
X DIRECTION
(CENTER OF
SCANNING)

PERIPHERY IN
X DIRECTION
(EDGE OF
SCANNING)

# FIG. 37B

POSITION IN Y DIRECTION (A.U.)

—— CENTER IN X DIRECTION    - - - - PERIPHERY IN X DIRECTION

## FIG. 38

## FIG. 39

# FIG. 40

# FIG. 41

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014139655 A
- JP 2014139656 A
- JP 5228785 B
- WO 2006077706 A
- JP 2015034877 A
- JP 2014139657 A

- JP 4620901 B
- JP 5091112 B
- JP 4200223 B
- JP 5010445 B
- JP 7089131 A